# EUROPEAN PATENT APPLICATION

(11) **EP 4 576 750 A1**
(43) Date of publication of application: **25.06.2025**
(21) Application number: 23872850.5
(22) Date of filing: 08.09.2023
(51) Int. Cl.: H04M 1/72409, G06F 3/14, H04M 1/72448, H04M 1/02, G06F 3/041, G06F 3/0484

(54) **METHOD FOR SYNCHRONIZING DATA BETWEEN DEVICES, AND ELECTRONIC DEVICE THEREFOR**

(30) Priority: 28.09.2022 KR 20220123396; 03.11.2022 KR 20220145221
(71) Applicant: Samsung Electronics Co., Ltd., Suwon-si, Gyeonggi-do 16677 (KR)
(72) Inventor: KIM, Mingyu, Suwon-si Gyeonggi-do 16677 (KR); KIM, Seonghun, Suwon-si Gyeonggi-do 16677 (KR); WOO, Kwangtaek, Suwon-si Gyeonggi-do 16677 (KR); CHOI, Jaeho, Suwon-si Gyeonggi-do 16677 (KR); AN, Jinwan, Suwon-si Gyeonggi-do 16677 (KR)
(74) Representative: Walaski, Jan Filip
(86) International application number: PCT/KR2023/013477
(87) International publication number: WO 2024/071730

(57) **Abstract**

An electronic device, according to one embodiment, may comprise: a communication module that receives a data synchronization request with a target electronic device including an expandable display; a display module; and a processor that determines screen settings according to the data synchronization request. The processor may compare a form factor of the electronic device with a form factor of the target electronic device, obtain a plurality of aspect ratios according to an aspect ratio of the electronic device and a display expansion of the target electronic device on the basis of the comparison result, determine whether the aspect ratio of the electronic device corresponds to aspect ratios of the target electronic device, and determine a screen setting to be applied to the target electronic device on the basis of the aspect ratio that has been determined to correspond to the aspect ratio of the electronic device from among the aspect ratios of the target electronic device.

## Description

### TECHNICAL FIELD

Various embodiments of the following disclosure relate to a method of synchronizing data between different devices, an electronic device thereof, and a non-transitory computer-readable storage medium.

### BACKGROUND ART

As display technology advances, terminal devices equipped with flexible displays and augmented reality (AR)/virtual reality (VR) are emerging as user terminal devices. A flexible display may be implemented as a foldable display or a rollable display. AR/VR may be implemented on a VR display. As various types of user terminal devices become commercialized, a new method is required for synchronizing data from an existing user terminal device to a new type of user terminal device.

### DISCLOSURE OF THE INVENTION

### TECHNICAL SOLUTIONS

According to an embodiment, an electronic device includes a communication module configured to receive a request for synchronizing data with a target electronic device including an expandable display, wherein the expandable display includes a plurality of displays or a single expandable display. According to an embodiment, the electronic device may include a display module. According to an embodiment, the electronic device may include a memory configured to store instructions. According to an embodiment, the electronic device may include a processor. According to an embodiment, the electronic device may compare, according to the request for synchronizing data, a form factor of the electronic device to a form factor of the target electronic device. According to an embodiment, the processor of the electronic device may obtain, based on the comparison result, an aspect ratio of the electronic device and a plurality of aspect ratios according to display expansion of the target electronic device. According to an embodiment, the processor of the electronic device may determine whether the aspect ratio of the electronic device corresponds to the aspect ratios of the target electronic device. According to an embodiment, the processor of the electronic device may determine, based on an aspect ratio determined to correspond to the aspect ratio of the electronic device among the aspect ratios of the target electronic device, a screen setting to be applied to the target electronic device.

According to an embodiment, the electronic device may include a communication module configured to receive a request for synchronizing data with the target electronic device. According to an embodiment, the electronic device may include a display module including an expandable display, wherein the expandable display includes a plurality of displays or a single expandable display. According to an embodiment, the electronic device may include a memory including instructions. According to an embodiment, the electronic device may include a processor. According to an embodiment, the electronic device may compare, according to the request for synchronizing data, a form factor of the electronic device to a form factor of the target electronic device. According to an embodiment, the processor of the electronic device may obtain, based on the comparison result, a plurality of aspect ratios according to display expansion of the electronic device and an aspect ratio of the target electronic device. According to an embodiment, the processor of the electronic device may determine whether the aspect ratios of the electronic device correspond to the aspect ratio of the target electronic device. According to an embodiment, the processor of the electronic device may determine, based on an aspect ratio determined to correspond to the aspect ratio of the target electronic device among the aspect ratios of the electronic device, a screen setting to be applied to the target electronic device.

According to an embodiment, a method of synchronizing data between electronic devices includes comparing a form factor of an electronic device to a form factor of a target electronic device. According to an embodiment, the method of synchronizing data between electronic devices may include receiving a request for synchronizing data from the electronic device with the target electronic device including an expandable display, wherein the expandable display includes a plurality of displays or a single expandable display. The method of synchronizing data between electronic devices may include obtaining, based on the comparison result, an aspect ratio of the electronic device and a plurality of aspect ratios according to display expansion of the target electronic device. According to an embodiment, the method of synchronizing data between electronic devices may include determining whether the aspect ratio of the electronic device corresponds to the aspect ratios of the target electronic device. According to an embodiment, the method of synchronizing data between electronic devices may include determining, based on an aspect ratio determined to correspond to the aspect ratio of the electronic device among the aspect ratios of the target electronic device, a screen setting to be applied to the target electronic device.

According to an embodiment, the method of synchronizing data between electronic devices may include comparing a form factor of the electronic device to a form factor of the target electronic device. According to an embodiment, the method of synchronizing data between electronic devices may include receiving a request for synchronizing data from the electronic device with the target electronic device including an expandable display, wherein the expandable display includes a plurality of displays or a single expandable display. The method of synchronizing data between electronic devices may include obtaining, based on the comparison result, a plurality of aspect ratios according to display expansion of the electronic device and an aspect ratio of the target electronic device. According to an embodiment, the method of synchronizing data between electronic devices may include determining whether the aspect ratios of the electronic device corresponds to the aspect ratio of the target electronic device. According to an embodiment, the method of synchronizing data between electronic devices may include determining, based on an aspect ratio determined to correspond to the aspect ratio of the target electronic device among the aspect ratios of the electronic device, a screen setting to be applied to the target electronic device.

According to an embodiment, a computer program stored in a medium may be combined with hardware to execute an operation of comparing a form factor of an electronic device to a form factor of a target electronic device. According to an embodiment, the computer program stored in the medium may be combined with hardware to execute an operation of receiving a request for synchronizing data from the electronic device with the target electronic device including an expandable display, wherein the expandable display includes a plurality of displays or a single expandable display. According to an embodiment, the computer program stored in the medium may be combined with hardware to execute an operation of obtaining, based on the comparison result, an aspect ratio of the electronic device and a plurality of aspect ratios according to display expansion of the target electronic device. According to an embodiment, the computer program stored in the medium may be combined with hardware to execute an operation of determining whether the aspect ratio of the electronic device corresponds to the aspect ratios of the target electronic device. According to an embodiment, the computer program stored in the medium may be combined with hardware to execute an operation of determining, based on an aspect ratio determined to correspond to the aspect ratio of the electronic device among the aspect ratios of the target electronic device, a screen setting to be applied to the target electronic device.

According to an embodiment, a computer-readable storage medium may store a computer program configured to execute an operation of comparing a form factor of an electronic device to a form factor of a target electronic device. According to an embodiment, the computer-readable storage medium may store the computer program configured to execute an operation of receiving a request for synchronizing data from the electronic device with the target electronic device including an expandable display, wherein the expandable display includes a plurality of displays or a single expandable display. According to an embodiment, the computer-readable storage medium may store the computer program configured to execute an operation of obtaining, based on the comparison result, an aspect ratio of the electronic device and a plurality of aspect ratios according to display expansion of the target electronic device. According to an embodiment, the computer-readable storage medium may store the computer program configured to execute an operation of determining whether the aspect ratio of the electronic device corresponds to the aspect ratios of the target electronic device. According to an embodiment, the computer-readable storage medium may store the computer program configured to execute an operation of determining, based on an aspect ratio determined to correspond to the aspect ratio of the electronic device among the aspect ratios of the target electronic device, a screen setting to be applied to the target electronic device.

According to an embodiment, the computer program stored in the medium may be combined with hardware to execute an operation of comparing a form factor of an electronic device to a form factor of a target electronic device. According to an embodiment, the computer program stored in the medium may execute an operation of receiving a request for synchronizing data from the electronic device with the target electronic device including an expandable display, wherein the expandable display includes a plurality of displays or a single expandable display. According to an embodiment, the computer program stored in the medium may execute an operation of obtaining, based on the comparison result, a plurality of aspect ratios according to display expansion of the electronic device and an aspect ratio of the target electronic device. According to an embodiment, the computer program stored in the medium may execute an operation of determining whether the aspect ratios of the electronic device correspond to the aspect ratio of the target electronic device. According to an embodiment, the computer program stored in the medium may execute an operation of determining, based on an aspect ratio determined to correspond to the aspect ratio of the target electronic device among the aspect ratios of the electronic device, a screen setting to be applied to the target electronic device.

According to an embodiment, the computer-readable storage medium may store the computer program configured to execute an operation of comparing a form factor of an electronic device to a form factor of a target electronic device. According to an embodiment, the computer-readable storage medium may store the computer program configured to execute an operation of receiving a request for synchronizing data from the electronic device including an expandable display with the target electronic device, wherein the expandable display includes a plurality of displays or a single expandable display. According to an embodiment, the computer-readable storage medium may store the computer program configured to execute an operation of obtaining, based on the comparison result, a plurality of aspect ratios according to display expansion of the electronic device and an aspect ratio of the target electronic device. According to an embodiment, the computer-readable storage medium may store the computer program configured to execute an operation of determining whether the aspect ratios of the electronic device correspond to the aspect ratio of the target electronic device. According to an embodiment, the computer-readable storage medium may store the computer program configured to execute an operation of determining, based on an aspect ratio determined to correspond to the aspect ratio of the target electronic device among the aspect ratios of the electronic device, a screen setting to be applied to the target electronic device.

### BRIEF DESCRIPTION OF DRAWINGS

FIG. 1 is a block diagram of an electronic device in a network environment, according to an embodiment.
FIG. 2A is a diagram illustrating an electronic device 200 in an unfolded state, according to an embodiment.
FIG. 2B is a diagram illustrating an electronic device 200 in a folded state, according to an embodiment.
FIG. 2C is a perspective view illustrating an example of a fully unfolded state and a partially unfolded state (or an intermediate state) of the electronic device 200, according to one embodiment.
FIGS. 3A and 3B are front perspective views of an electronic device in a closed state and an open state, according to an embodiment.
FIGS. 4A and 4B are rear perspective views of an electronic device in a closed state and an open state, according to an embodiment.
FIG. 5A is a perspective view of a front surface of a mobile electronic device, according to an embodiment.
FIG. 5B is a perspective view of a rear surface of the electronic device of FIG. 5A, according to an embodiment.
FIG. 5C is an exploded perspective view of the electronic device of FIG. 5A.
FIG. 6 is a block diagram of a display module according to an embodiment.
FIG. 7 is a diagram illustrating aspect ratios of electronic devices, according to an embodiment.
FIG. 8A schematically illustrates an electronic device and a target electronic device, according to an embodiment.
FIG. 8B is a flowchart illustrating the overall operation of a method of synchronizing data between electronic devices, according to an embodiment.
FIG. 9A is a flowchart illustrating a method of synchronizing data between electronic devices, according to an embodiment.
FIG. 9B illustrates an example of a screen setting of a target electronic device, according to an embodiment.
FIG. 10A is a flowchart of an example of aspect ratios according to an embodiment.
FIG. 10B is a flowchart illustrating an operation of finding a similar aspect ratio, according to an embodiment.
FIG. 11A schematically illustrates an electronic device and a target electronic device having a plurality of aspect ratios, according to an embodiment.
FIG. 11B is a flowchart illustrating a method of synchronizing data between electronic devices having a plurality of display aspect ratios, according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

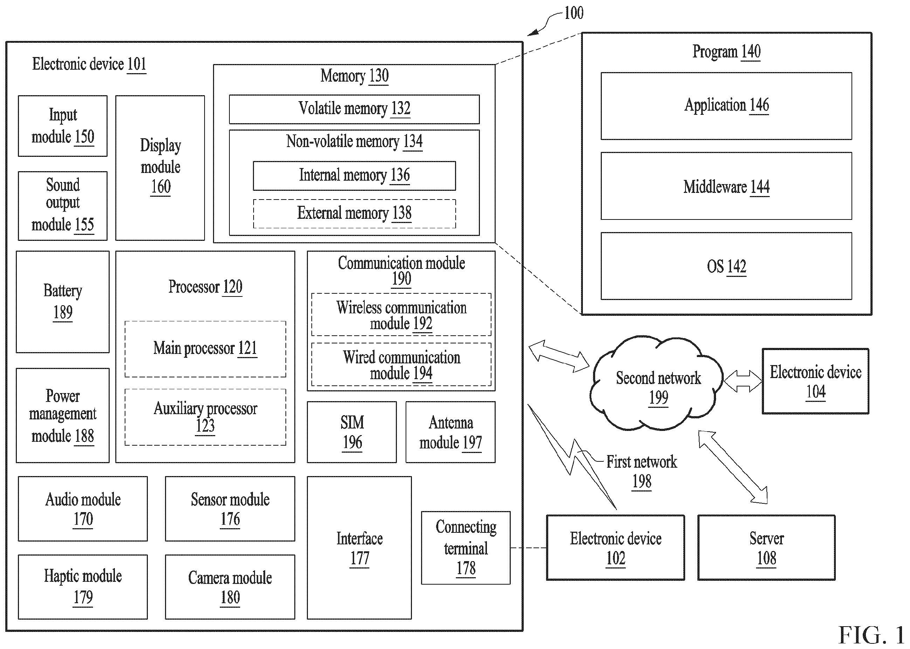

FIG. 1 is a block diagram of an electronic device in a network environment, according to an embodiment.

Referring to FIG. 1, the electronic device 101 in a network environment 100 may communicate with an electronic device 102 via a first network 198 (e.g., a short-range wireless communication network) or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added to the electronic device 101. In an embodiment, some (e.g., the sensor module 176, the camera module 180, or the antenna module 197) of the components may be integrated as a single component (e.g., the display module 160).

The processor 120 may execute, for example, software (e.g., the program 140) to control at least one other component (e.g., a hardware or software component) of the electronic device 101 connected to the processor 120 and may perform various data processing or computation. According to an embodiment, as at least a portion of data processing or computations, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a portion of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. An AI model may be generated through machine learning. Such learning may be performed by, for example, the electronic device 101, in which an AI model is executed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination of two or more thereof, but is not limited thereto. The AI model may additionally or alternatively include a software structure other than the hardware structure.

The memory 130 may store various pieces of data used by at least one component (e.g., the processor 120 or the sensor module 176) of the electronic device 101. The data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive, from the outside (e.g., a user) of the electronic device 101, a command or data to be used by another component (e.g., the processor 120) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing a recording. The receiver may be used to receive an incoming call. According to an embodiment, the receiver may be implemented separately from the speaker or as a part of the speaker.

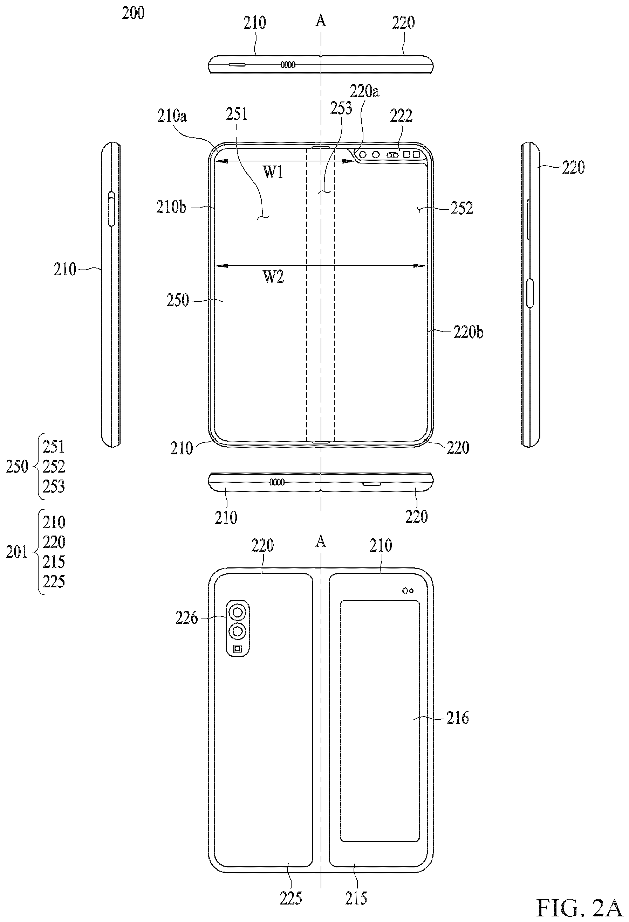

The display module 160 may visually provide information to the outside (e.g., a user) of the electronic device 101. The display module 160 may include, for example, a display, a hologram device, or a projector and a control circuit to control a corresponding one of the display, the hologram device, and the projector. According to an embodiment, the display module 160 may include a touch sensor adapted to detect a touch or a pressure sensor adapted to measure an intensity of a force incurred by the touch. The display module 160 may be referred to as a display of which a viewable region may be expanded from one side (e.g., the side where a user is positioned) and may also be referred to as a flexible display. FIGS. 2A to 6 illustrate a single display, a foldable display, and a rollable display as examples of the display module 160. The size of the viewable region may be referred to as a display size.

A display size detection module (not shown) of the electronic device 101 may be a module for calculating the size of the visible region of the display module 160. The display size detection module may obtain (or receive) a sensing value corresponding to the changed display size described above, based on at least one among capacitance change sensing, inductance change sensing, magnetic flux change sensing, touch point change sensing, resistance change sensing, and distance change sensing according to the change in the size of the viewable region. The display size detection module (not shown) may be operatively connected to the processor 120 to transmit the obtained (or received) sensing value to the processor 120.

The audio module 170 may convert a sound into an electric signal or vice versa. According to an embodiment, the audio module 170 may obtain the sound via the input module 150 or output the sound via the sound output module 155 or an external electronic device (e.g., an electronic device 102, such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus, which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell, which is not rechargeable, a secondary cell, which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., an AP) and that support direct (e.g., wired) communication or wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local region network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., a LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., an mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to an embodiment, the antenna module 197 may form a mmWave antenna module. According to an embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and exchange signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request, and may transfer a result of the performance to the electronic device 101. The electronic device 101 may provide the result, with or without further processing the result, as at least part of a response to the request. To that end, cloud computing, distributed computing, mobile edge computing (MEC), or client-server computing technology may be used, for example. The electronic device 101 may provide ultra low-latency services using, e.g., distributed computing or MEC. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., a smart home, a smart city, a smart car, or healthcare) based on 5G communication technology or IoT-related technology.

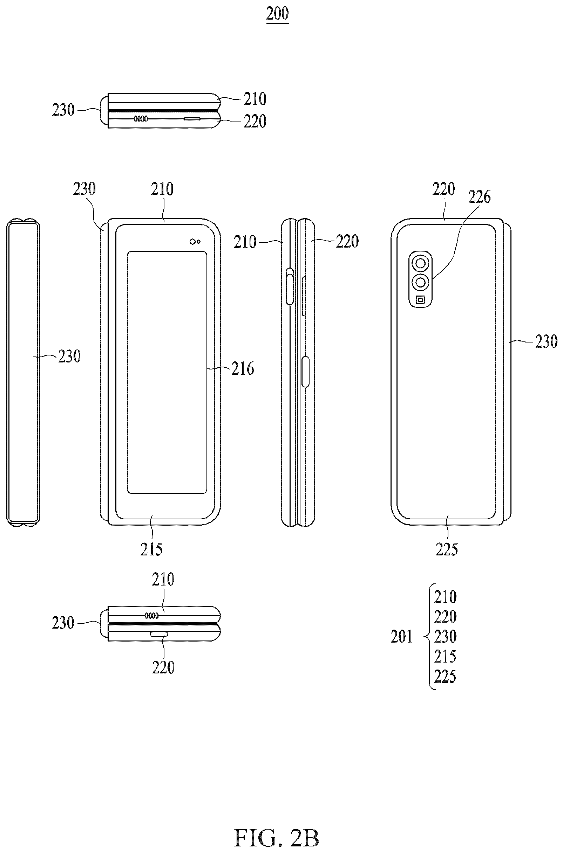

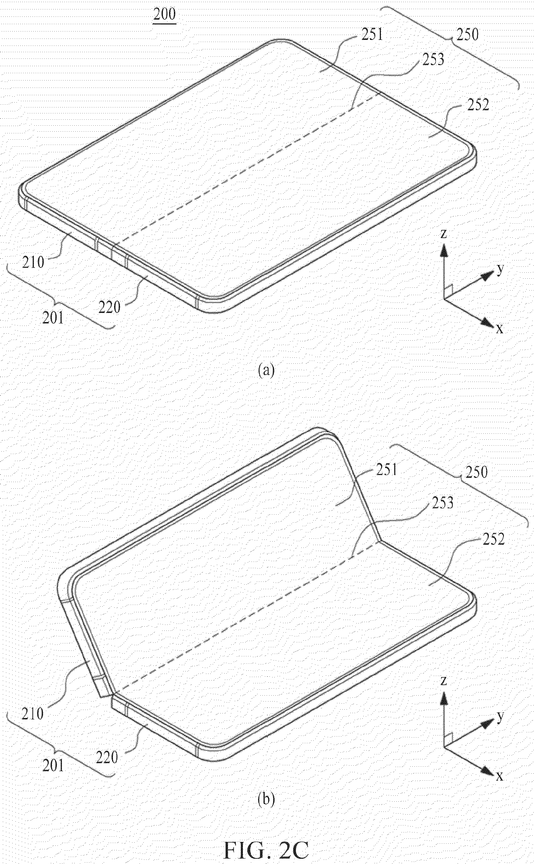

FIG. 2A is a diagram illustrating an electronic device 200 in an unfolded state, according to an embodiment. FIG. 2B is a diagram illustrating an electronic device 200 in a folded state, according to an embodiment. FIG. 2C is a perspective view illustrating an example of a fully unfolded state and a partially unfolded state (or an intermediate state) of the electronic device 200, according to one embodiment.

The electronic device 200 of FIGS. 2A through 2C is an example of the electronic device 101 of FIG. 1, and may be a foldable or bendable electronic device.

In FIG. 2C and other following drawings, illustrated is a spatial coordinate system defined by an X-axis, a Y-axis, and a Z-axis that are orthogonal to each other. Here, the X-axis may represent a width direction of an electronic device, the Y-axis may represent a length direction of the electronic device, and the Z-axis may represent a height (or thickness) direction of the electronic device. In the following description, a first direction may indicate a direction parallel to the Z axis.

Referring to FIGS. 2A and 2B, in one embodiment, the electronic device 200 may include a foldable housing 201, and a flexible or foldable display 250 (hereinafter, the "display" 250 in short) (e.g., the display module 160 of FIG. 1) disposed in a space formed by the foldable housing 201. According to an embodiment, a surface on which the display 250 is disposed (or a surface on which the display 250 is viewed from an outside of the electronic device 200) may be defined as a front surface of the electronic device 200. In addition, a surface opposite to the front surface may be defined as a rear surface of the electronic device 200. Further, a surface surrounding a space between the front surface and the rear surface may be defined as a side surface of the electronic device 200.

According to an embodiment, the foldable housing 201 may include a first housing structure 210, a second housing structure 220 including a sensor area 222, a first rear cover 215, a second rear cover 225, and a hinge structure 230. Here, the hinge structure 230 may include a hinge cover that covers a foldable portion of the foldable housing 201. The foldable housing 201 of the electronic device 200 is not limited to the shape and combination shown in FIGS. 2A and 2B, and may be implemented in a different shape or a different combination of components. For example, in an example embodiment, the first housing structure 210 and the first rear cover 215 may be integrally formed, and the second housing structure 220 and the second rear cover 225 may be integrally formed.

According to an embodiment, the first housing structure 210 may be connected to the hinge structure 230 and may include a first surface facing a first direction and a second surface facing a second direction opposite to the first direction. The second housing structure 220 may be connected to the hinge structure 230 and may include a third surface facing a third direction and a fourth surface facing a fourth direction opposite to the third direction. The second housing structure 220 may rotate with respect to the first housing structure 210 about the hinge structure 230. A state of the electronic device 200 may be changed to a folded state or an unfolded state.

According to an embodiment, the first surface may face the third surface in a state in which the electronic device 200 is fully folded, and the third direction may be identical to the first direction in a state in which the electronic device 200 is fully unfolded.

According to an embodiment, the first housing structure 210 and the second housing structure 220 may be disposed on both sides of a folding axis A and generally symmetrical with respect to the folding axis A. As to be described hereinafter, an angle or distance between the first housing structure 210 and the second housing structure 220 may vary according to whether the state of the electronic device 200 is the unfolded state, the folded state, or a partially unfolded or folded state (or an intermediate state). According to an embodiment, unlike the first housing structure 210, the second housing structure 220 may additionally include the sensor area 222, in which various sensors are arranged, but may have a symmetrical shape in the other area. However, the first housing structure 210 and the second housing structure 220 may have mutually symmetrical shapes in areas other than the sensor area 222.

According to an embodiment, as shown in FIG. 2A, the first housing structure 210 and the second housing structure 220 may together form a recess for accommodating the display 250. According to an embodiment, due to the sensor area 222, the recess may have at least two different widths in a direction perpendicular to the folding axis A. For example, the recess may have a first width w1 between a first portion 210a of the first housing structure 210 parallel to the folding axis A and a first portion 220a of the second housing structure 220 formed on a periphery of the sensor area 222, and a second width w2 formed by a second portion 210b of the first housing structure 210 and a second portion 220b of the second housing structure 220 not corresponding to the sensor area 222 and being parallel to the folding axis A. In this case, the second width w2 may be longer than the first width w1. According to an embodiment, the first portion 220a and the second portion 220b of the second housing structure 220 may be at different distances from the folding axis A. The widths of the recess are not limited to the shown example. In another embodiment, the recess may have a plurality of widths due to the shape of the sensor area 222 or asymmetrical portions of the first housing structure 210 and the second housing structure 220. According to various embodiments, the sensor area 222 may be formed to have a predetermined area adjacent to one corner of the second housing structure 220. However, the arrangement, shape, and size of the sensor area 222 are not limited to the shown example. For example, in another embodiment, the sensor area 222 may be provided at another corner of the second housing structure 220 or in a predetermined area between an upper corner and a lower corner. In an embodiment, components embedded in the electronic device 200 to perform various functions may be exposed to the front surface of the electronic device 200 through the sensor area 222 or through one or more openings provided in the sensor area 222. In various embodiments, the components may include various types of sensors. The sensors may include, for example, at least one of a front camera, a receiver, or a proximity sensor. According to various embodiments, the sensor area 222 may not be included in the second housing structure 220 or may be formed at a position different from that shown in the drawings.

According to an embodiment, at least a portion of the first housing structure 210 and the second housing structure 220 may be formed of a metal material or a non-metal material having a selected magnitude of rigidity to support the display 250. At least a portion of the first housing structure 210 and the second housing structure 220 formed of the metal material may provide a ground plane for the electronic device 200, and may be electrically connected to a ground line formed on a PCB disposed in the foldable housing 201.

According to an embodiment, the first rear cover 215 may be disposed on one side of the folding axis A on the rear surface of the electronic device 200, and may have, for example, a substantially rectangular periphery that may be enclosed by the first housing structure 210. Similarly, the second rear cover 225 may be disposed on the other side of the folding axis A on the rear surface of the electronic device 200, and may have a periphery that may be surrounded by the second housing structure 220.

According to an embodiment, the first rear cover 215 and the second rear cover 225 may be substantially symmetrical about the folding axis A. However, the first rear cover 215 and the second rear cover 225 are not necessarily mutually symmetrical, and in another example embodiment, the electronic device 200 may include a first rear cover 215 and a second rear cover 225 in various shapes. In another embodiment, the first rear cover 215 may be formed integrally with the first housing structure 210, and the second rear cover 225 may be formed integrally with the second housing structure 220.

According to an embodiment, the first rear cover 215, the second rear cover 225, the first housing structure 210, and the second housing structure 220 may form a space in which various components (e.g., a PCB, or a battery) of the electronic device 200 are to be arranged. According to an embodiment, one or more components may be disposed or visually exposed on the rear surface of the electronic device 200. For example, at least a portion of a sub-display may be visually exposed through a first rear area 216 of the first rear cover 215. In another embodiment, one or more components or sensors may be visually exposed through a second rear area 226 of the second rear cover 225. In various embodiments, the sensors may include a proximity sensor and/or a rear camera.

According to an embodiment, a front camera exposed to the front surface of the electronic device 200 through one or more openings provided in the sensor area 222, or a rear camera exposed through the second rear area 226 of the second rear cover 225 may include one or more lenses, an image sensor, and/or an ISP. A flash may include, for example, a light-emitting diode (LED) or a Xenon lamp. In some embodiments, two or more lenses (IR cameras, wide angle and telephoto lenses) and image sensors may be disposed on one face of the electronic device 200.

Referring to FIG. 2B, the hinge cover may be disposed between the first housing structure 210 and the second housing structure 220 to cover internal components (e.g., the hinge structure 230). According to an embodiment, the hinge structure 230 may be covered by a portion of the first housing structure 310 and a portion of the second housing structure 320 or may be exposed to the outside, depending on the state of the electronic device 200 (e.g., the unfolded state, the intermediate state, or the folded state).

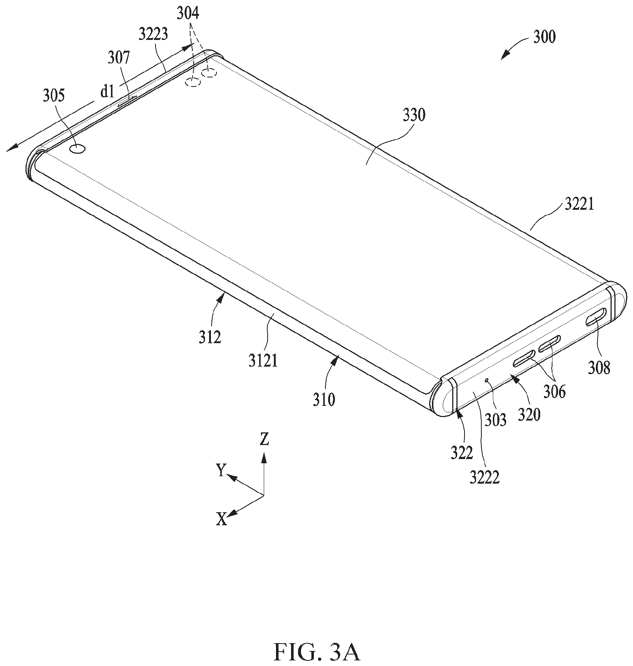

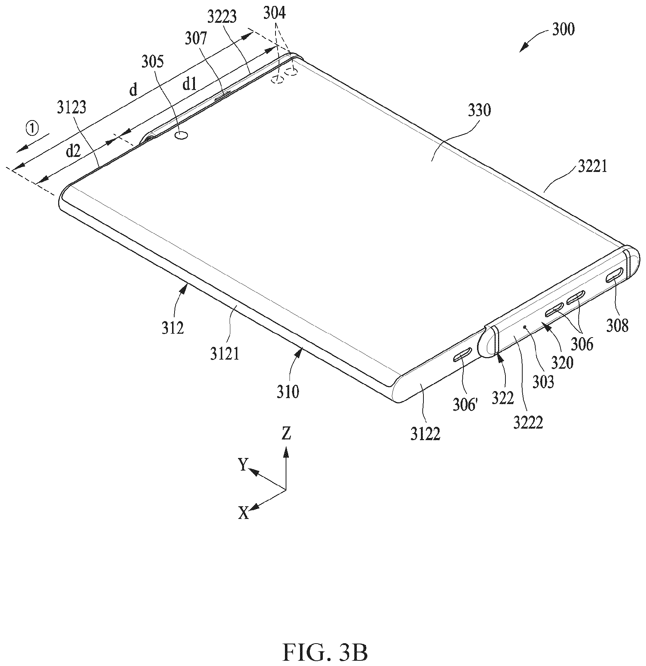

According to an embodiment, when the electronic device 200 is in the unfolded state (e.g., a fully unfolded state) as illustrated in FIG. 2A, the hinge structure 230 may be covered by the first housing structure 210 and the second housing structure 220 not to be exposed. In another example, when the electronic device 200 is in the folded state (e.g., the fully folded state) as illustrated in FIG. 3, the hinge structure 230 may be exposed to the outside, being between the first housing structure 210 and the second housing structure 220. In yet another example, in the intermediate state in which the first housing structure 210 and the second housing structure 220 are folded with a certain angle, the hinge structure 230 may be partially exposed to the outside, being between the first housing structure 210 and the second housing structure 220. However, the area exposed in this case may be smaller than that in the fully folded state. In one embodiment, the hinge cover 230 may have a curved surface.

According to an embodiment, the display 250 may be disposed in a space formed by the foldable housing 201. For example, the display 250 may be seated on the recess formed by the foldable housing 201 and may be viewed from the outside through the front surface of the electronic device 200. For example, the display 250 may constitute most of the front surface of the electronic device 200. Accordingly, the front surface of the electronic device 200 may include the display 250, and a partial area of the first housing structure 210 and a partial area of the second housing structure 220, which are adjacent to the display 250. **In** addition, the rear surface of the electronic device 200 may include the first rear cover 215, a partial area of the first housing structure 210 adjacent to the first rear cover 215, the second rear cover 225, and a partial area of the second housing structure 220 adjacent to the second rear cover 225.

According to an embodiment, the display 250 may refer to a display having at least a partial area that is deformable into a flat surface or a curved surface. The display 250 may be referred to as an expandable display including a plurality of displays. According to an embodiment, the display 250 may include a folding area 253, a first area 251 disposed on one side of the folding area 253 (e.g., on the left side of the folding area 253 shown in FIG. 2A), and a second area 252 disposed on the other side of the folding area 253 (e.g., on the right side of the folding area 253 shown in FIG. 2A).

However, such an area division of the display 250 shown in FIG. 2A is merely an example, and the display 250 may be divided into a plurality of areas (e.g., four or more areas, or two areas) depending on a structure or functions thereof. For example, as shown in FIG. 2A, the display 200 may be divided into areas based on the folding area 203 extending in parallel to the folding axis A. In another embodiment, the display 200 may be divided into areas based on another folding axis (e.g., a folding axis parallel to a width direction of an electronic device).

According to an embodiment, the display 250 may be coupled to or disposed adjacent to a touch panel including a touch sensing circuit and a pressure sensor for measuring a strength (a pressure) of a touch. For example, the display 250 may be coupled to or disposed adjacent to a touch panel for detecting a stylus pen of an electromagnetic resonance (EMR) type, as an example of the touch panel.

According to an embodiment, the first area 251 and the second area 252 may be generally symmetrical about the folding area 253. However, unlike the first area 251, the second area 252 may include a notch cut according to the presence of the sensor area 222, but may be symmetrical to the first area 251 in the other areas. In other words, the first area 251 and the second area 252 may include mutually symmetrical portions and mutually asymmetrical portions.

According to an embodiment, an edge thickness of each of the first area 251 and the second area 252 may be different from an edge thickness of the folding area 253. The edge thickness of the folding area 253 may be less than those of the first area 251 and the second area 252. For example, the first area 251 and the second area 252 may be asymmetrical in terms of thickness when cross-sectionally viewed. For example, an edge of the first area 251 may be formed to have a first radius of curvature, and an edge of the second area 252 may be formed to have a second radius of curvature different from the first radius of curvature. In an embodiment, the first area 251 and the second area 252 may be symmetrical in terms of thickness when cross-sectionally viewed.

Hereinafter, each area of the display 250, and operations of the first housing structure 210 and the second housing structure 220 depending on the state (e.g., a folded state, the unfolded state, or the intermediate state) of the electronic device 200) will be described.

According to an embodiment, when the electronic device 200 is in the unfolded state (e.g., FIG. 2A), the first housing structure 210 and the second housing structure 220 may be arranged to face the same direction while forming an angle of 180 degrees. The surface of the first area 251 of the display 250 and the surface of the second area 252 thereof may face the same direction (e.g., a front direction of an electronic device) while forming an angle of 180 degrees. The folding area 253 may form the same plane together with the first area 251 and the second area 252.

According to an embodiment, when the electronic device 200 is in the folded state (e.g., FIG. 2B), the first housing structure 210 and the second housing structure 220 may be arranged to face each other. The surface of the first area 251 and the surface of the second area 252 of the display 250 may face each other while forming a narrow angle (e.g., an angle between 0 degrees to 10 degrees). At least a portion of the folding area 253 may form a curved surface having a predetermined curvature.

According to an embodiment, when the electronic device 200 is in the intermediate state, the first housing structure 210 and the second housing structure 220 may be arranged with a certain angle. The surface of the first area 251 and the surface of the second area 252 of the display 250 may form an angle greater than that in the folded state and smaller than that in the unfolded state. At least a portion of the folding area 253 may include a curved surface having a predetermined curvature, and the curvature may be less than that in the folded state.

An upper part of FIG. 2C illustrates a state in which the electronic device 200 is fully unfolded, and a lower part of FIG. 2C illustrates an intermediate state in which the electronic device 200 is partially unfolded. As described above, the state of the electronic device 200 may be changed to the folded state or the unfolded state. According to an embodiment, when viewed in a direction of a folding axis (e.g., the folding axis A of FIG. 2A), the electronic device 200 may be folded in two types, i.e., an "in-folding" type in which the front surface of the electronic device 200 is folded to form an acute angle and an "out-folding" type in which the front surface of the electronic device 200 is folded to form an obtuse angle. For example, in the state in which the electronic device 200 is folded in the in-folding type, the first surface of the first housing structure 210 may face the third surface of the second housing structure 220. In the fully unfolded state, the first surface of the first housing structure 210 and the third surface of the second housing structure 220 may face the same direction (e.g., a direction parallel to the z-axis).

According to an embodiment, when the electronic device 200 is folded in the out-folding type, the second surface of the first housing structure 210 may face the fourth surface of the second housing structure 220.

In addition, although not shown in the drawings, the electronic device 200 may include a plurality of hinge axes (e.g., two parallel hinge axes including the folding axis A of FIG. 2A and another axis parallel to the folding axis A). In this example, the electronic device 200 may also be folded in a "multi-folding" type in which the in-folding type and the out-folding type are combined.

The in-folding type may refer to a state in which the display 250 is not exposed to the outside in the fully folded state. The out-folding type may refer to a state in which the display 250 is exposed to the outside in the fully folded state. The lower part of FIG. 2C shows the intermediate state in which the electronic device 200 is partially unfolded in an in-folding process.

Although the state in which the electronic device 200 is folded in the in-folding type is described below for convenience's sake, it should be noted that the description may be similarly applied to the state in which the electronic device 200 is folded in the out-folding type.

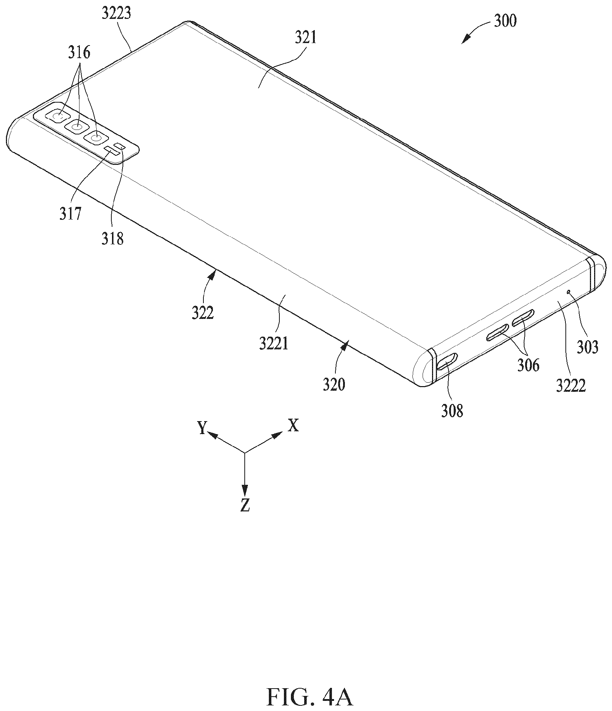

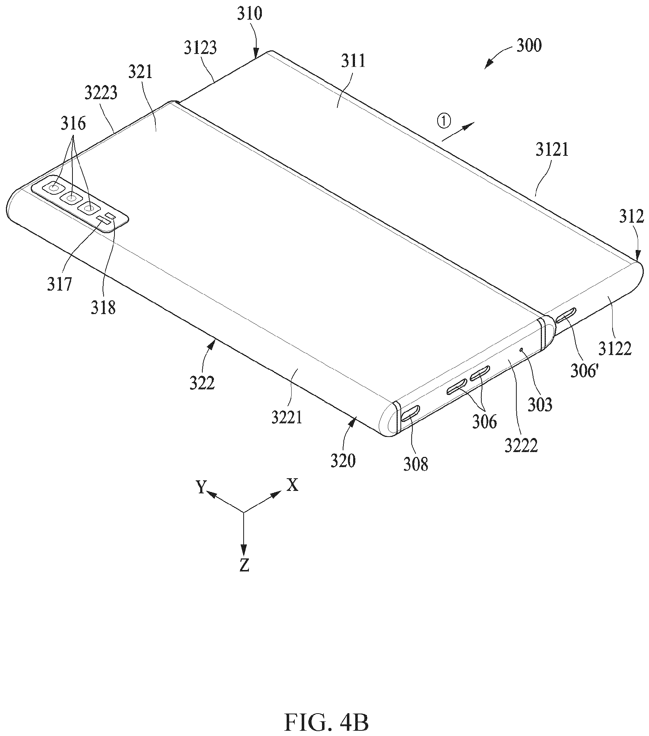

FIGS. 3A and 3B are front perspective views of an electronic device in a closed state and an open state, according to an embodiment. FIGS. 4A and 4B are rear perspective views of an electronic device in a closed state and an open state, according to an embodiment.

The electronic device 300 of FIG. 3A may be at least partially similar to the electronic device 101 of FIG. 1, or may further include other example embodiments of the electronic device.

Referring to FIGS. 3A to 4B, the electronic device 300 may include a first housing 310, and a second housing 320 that is at least partially movably coupled to the first housing 310. According to an embodiment, the first housing 310 may include a first plate 311 and a first side frame 312 that extends in a substantially vertical direction (e.g., a z-axis direction) along an edge of the first plate 311. According to an embodiment, the first side frame 312 may include a first side surface 3121, a second side surface 3122 extending from one end of the first side surface 3121, and a third side surface 3123 extending from the other end of the first side surface 3121. According to an embodiment, the first housing 310 may include a first space that is at least partially closed from the outside through the first plate 311 and the first side frame 312.

According to an embodiment, the second housing 320 may include a second plate 321 and a second side frame 322 that extends in a substantially vertical direction (e.g., a z-axis direction) along an edge of the second plate 321. According to an embodiment, the second side frame 322 may include a fourth side surface 3221 facing away from the first side surface 3121, a fifth side surface 3222 extending from one end of the fourth side surface 3221 and at least partially coupled to the second side surface 3122, and a sixth side surface 3223 extending from the other end of the fourth side surface 3221 and at least partially coupled to the third side surface 3123. In another embodiment, the fourth side surface 3221 may extend from a structure other than the second plate 321 and may also be coupled to the second plate 321. According to an embodiment, the second housing 320 may include a second space that is at least partially closed from the outside through the second plate 321 and the second side frame 322. According to an embodiment, the first plate 311 and the second plate 321 may be disposed to at least partially form a rear surface of the electronic device 300. For example, the first plate 311, the second plate 321, the first side frame 312, and the second side frame 322 may be formed of, for example, a polymer, coated or colored glass, ceramic, metal (e.g., aluminum, stainless steel (STS), or magnesium), or a combination of two or more of the above materials.

According to an embodiment, the electronic device 300 may include a flexible display 330 disposed to be supported by the first housing 310 and the second housing 320. The display 330 may be exposed to the outside of the electronic device 300 through a display area of the electronic device 300. The flexible display 330 may be referred to as an expandable and variable display 330 or a rollable display 330.According to an embodiment, the flexible display 330 may include a flat portion supported by the second housing 320 and a bendable portion extending from the flat portion and supported by the first housing 310. According to an embodiment, the bendable portion of the flexible display 330 may be disposed in the first space of the first housing 310 not to be exposed to the outside when the electronic device 300 is closed and may be exposed to the outside to extend from the flat portion while being supported by the first housing 310 when the electronic device 300 is open. Accordingly, the electronic device 300 may be a rollable electronic device in which a display screen of the flexible display 330 expands in response to an open operation according to a movement of the first housing 310 from the second housing 320.

According to an embodiment, in the electronic device 300, the first housing 310 may be at least partially inserted into the second space of the second housing 320, and may be coupled to be movable in direction ①. For example, in the closed state, the electronic device 300 may be maintained in a state in which the first housing 310 and the second housing 320 are coupled such that a distance between the first side surface 3121 and the fourth side surface 3221 is a first distance d1. According to an embodiment, in the open state, the electronic device 300 may be maintained in a state in which the first housing 310 is protruding from the second housing 320 to have a second interval distance d in which the first side surface 3121 is protruding from the fourth side surface 3221 by a predetermined distance d2. According to an embodiment, the flexible display 330 may be supported by the first housing 310 and/or the second housing 320 such that both ends thereof have curved edges, in the open state.

According to an embodiment, the electronic device 300 may automatically transition between the open state and the closed state by a driving unit disposed in the first space and/or the second space. For example, a processor (e.g., the processor 120 of FIG. 1) of the electronic device 300 may be configured to control an operation of the first housing 310 using the driving unit when an event for a transition between the open state and the closed state of the electronic device 300 is detected. In another embodiment, the first housing 310 may manually protrude from the second housing 320 through a user's manipulation. In this case, the first housing 310 may protrude by a protrusion amount desired by the user, and thus, a screen of the flexible display 330 may vary to have various display areas. Accordingly, the processor (e.g., the processor 120 of FIG. 1) of the electronic device 300 may display an object in various ways corresponding to a display area corresponding to a predetermined protrusion amount of the first housing 310, and may control to execute an application program.

According to an embodiment, the electronic device 300 may include at least one of an input device 303, sound output devices 306 and 307, sensor modules 304 and 317, camera modules 305 and 316, a connector port 308, a key input device (not shown), or an indicator (not shown). In another embodiment, at least one of the above-described components of the electronic device 200 may be omitted, or the electronic device 300 may further include other components.

According to an embodiment, the input device 303 may include a microphone 303. In an embodiment, the input device 303 may include a plurality of microphones 303 arranged to sense a direction of sound. The sound output devices 306 and 307 may include speakers 306 and 307. The speakers 306 and 307 may include an external speaker 306 and a phone call receiver 307. In another embodiment, when an external speaker 306' is disposed in the first housing 310, sound may be output through a speaker hole 306 formed in the second housing 320 in the closed state. According to an embodiment, the microphone 303 or the connector port 308 may also be formed to have substantially the same configuration. In another embodiment, the sound output devices 306 and 307 may include a speaker (e.g., a piezo speaker) that operates without a separate speaker hole 306.

According to an embodiment, the sensor modules 304 and 317 may generate an electrical signal or a data value corresponding to an internal operating state of the electronic device 300 or an external environmental state. The sensor modules 304 and 317 may include, for example, a first sensor module 304 (e.g., a proximity sensor or an illuminance sensor) disposed on a front surface of the second housing 320, and/or a second sensor module 317 (e.g., a heart rate monitoring (HRM) sensor) disposed on a rear surface of the second housing 320. According to an embodiment, the first sensor module 304 may be disposed below the flexible display 330 in the second housing 320. According to an embodiment, the first sensor module 304 may further include at least one of a proximity sensor, the illuminance sensor 304, a time of flight (TOF) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biometric sensor, a temperature sensor, or a humidity sensor.

According to an embodiment, the camera devices 305 and 316 may include a first camera device 305 disposed on the front surface of the second housing 320 of the electronic device 300 and a second camera device 316 disposed on the rear surface of the second housing 320. According to an embodiment, the electronic device 300 may include a flash 318 located near the second camera device 316. According to an embodiment, the camera devices 305 and 316 may include one or more lenses, an image sensor, and/or an ISP. According to an embodiment, the first camera device 305 may be disposed under the flexible display 330 and may be configured to capture an object through a portion of an active area of the flexible display 330. According to an embodiment, the flash 318 may include, for example, an LED or a xenon lamp. In an embodiment, two or more lenses (e.g., a wide-angle lens and a telephoto lens) and image sensors may be disposed on one surface of the electronic device 300.

According to an embodiment, the electronic device 300 may include at least one antenna (not shown). According to an embodiment, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. In another embodiment, an antenna structure may be formed through at least a portion of the first side frame 312 and/or the second side frame 322, which are formed of metal.

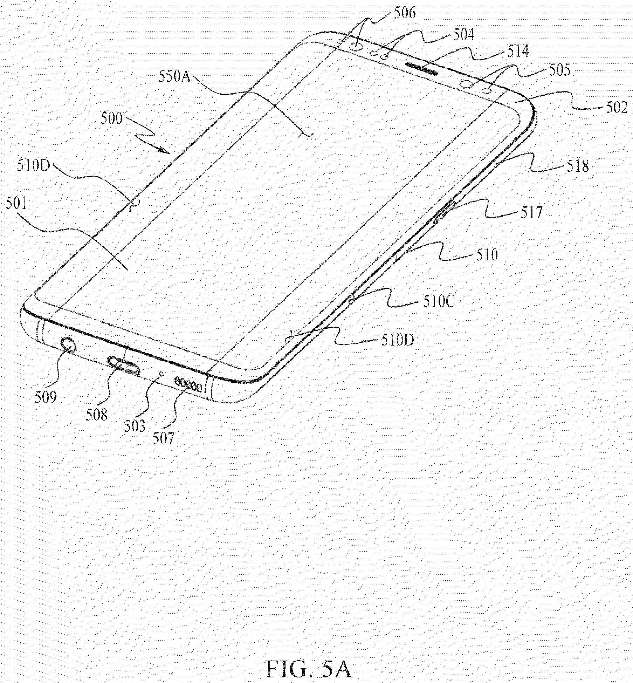

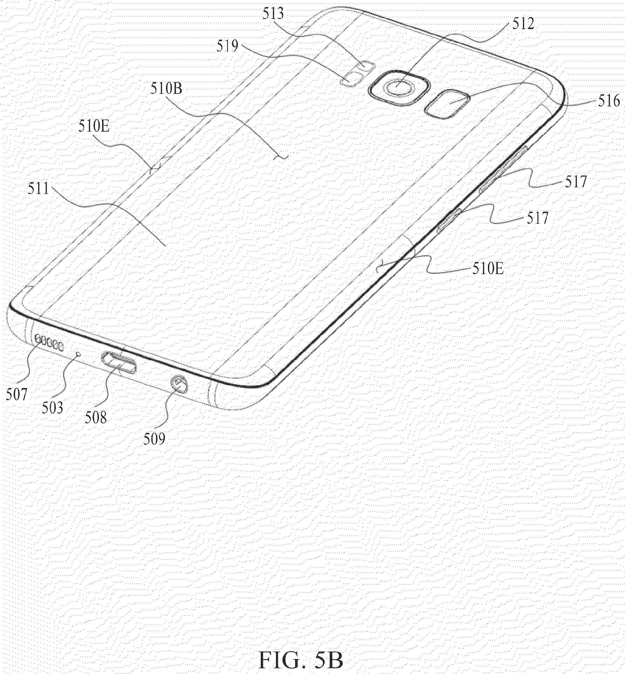

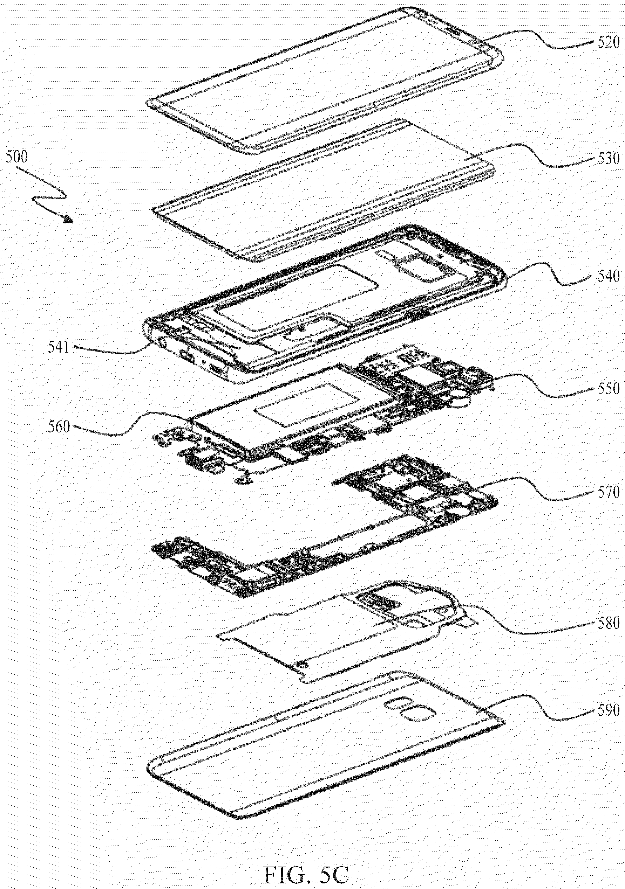

FIG. 5A is a perspective view of a front surface of a mobile electronic device, according to an embodiment. FIG. 5B is a perspective view of a rear surface of the electronic device of FIG. 5A, according to an embodiment. FIG. 5C is an exploded perspective view of the electronic device of FIG. 5A.

Referring to FIGS. 5A and 5B, an electronic device 500 (e.g., the electronic device 101 of FIG. 1) according to an embodiment may include a housing 510 including a first surface (or a front surface) 510A, a second surface (or a rear surface) 510B, and a side surface 510C surrounding a space between the first surface 510A and the second surface 510B. In an embodiment (not shown), the housing may also refer to a structure that forms a portion of the first surface 510A, the second surface 510B, and the side surface 510C of FIG. 5A. According to an embodiment, the first surface 510A may be formed of a front plate 502 (e.g., a glass plate or a polymer plate including various coating layers) of which at least a portion is substantially transparent. The second surface 510B may be formed of a rear plate 511 that is substantially opaque. For example, the rear plate 511 may be formed of coated or colored glass, ceramic, polymer, metal materials (e.g. aluminum, stainless steel (STS), or magnesium) or a combination of at least two of the above materials. The side surface 510C may be coupled to the front plate 502 and the rear plate 511 and may be formed of a side bezel structure (or a "side member") 518 including a metal and/or a polymer. In an embodiment, the rear plate 511 and the side bezel structure 518 may be integrally formed and may include the same material (e.g., a metal material such as aluminum).

In an embodiment, the front plate 502 may include two first regions 510D that curve and seamlessly extend from the first surface 510A toward the rear plate 511 at both ends of a long edge of the front plate 502. In the illustrated embodiment (see FIG. 5B), the rear plate 511 may include two second regions 510E that curve and extend seamlessly from the second surface 510B toward the front plate 502 at both ends of a long edge. In some embodiments, the front plate 502 (or the rear plate 511) may include only one of the first regions 510D (or the second regions 510E). In another embodiment, some of the first regions 510D or the second region 510E may not be included. In the above embodiments, in a side view of the electronic device 500, the side bezel structure 518 may have a first thickness (or width) at a side in which the first regions 510D or the second regions 510E are not included and may have a second thickness less than the first thickness at a side in which the first regions 510D or the second regions 510E are included.

According to an embodiment, the electronic device 500 may include at least one of a display 501, audio modules 503, 507, and 514, sensor modules 504, 516, and 519, camera modules 505, 512, and 513, a key input device 517, a light emitting element 506, and connector holes 508 and 509. In an embodiment, the electronic device 500 may not include at least one of components (e.g., the key input device 517 or the light emitting element 506) or additionally include other components.

The display 501 may be exposed through, for example, some portions of the front plate 502. In an embodiment, at least a portion of the display 501 may be exposed through the first surface 510A and the front plate 502 forming the first regions 510D of the side surface 510C. In an embodiment, edges of the display 501 may be formed to be substantially the same as a shape of an adjacent outer edge of the front plate 502. In an embodiment (not shown), a distance between outer edge of the display 501 and an outer edge of the front plate 502 may be substantially the same in order to expand an exposed area of the display 501.

In an embodiment (not shown), a recess or an opening may be formed in a portion of a screen display region of the display 501, and at least one of the audio module 514, the sensor module 504, the camera module 505, and the light emitting element 506 that are aligned with the recess or the opening may be included. In an embodiment (not shown), at least one of the audio module 514, the sensor module 504, the camera module 505, the sensor module 516 (i.e., fingerprint sensor), and the light emitting element 506 may be included in a rear face of the screen display region of the display 501. In an embodiment (not shown), the display 501 may be coupled to or arranged adjacent to a touch sensing circuit, a pressure sensor for measuring an intensity (pressure) of a touch, and/or a digitizer for detecting a magnetic-type stylus pen. In an embodiment, at least a portion of the sensor modules 504 and 519, and/or at least a portion of the key input devices 517 may be disposed in the first regions 510D and/or the second regions 510E.

The audio modules 503, 507, and 514 may include a microphone hole 503 and speaker holes 507 and 514. A microphone for acquiring an external sound may be disposed in the microphone hole 503. In some example embodiments, a plurality of microphones may be disposed to detect a direction of a sound. The speaker holes 507 and 514 may include an external speaker hole 507 and a receiver hole for a call 514. In some embodiments, the speaker holes 507 and 514 and the microphone hole 503 may be implemented as one hole, or a speaker (e.g., a Piezo speaker) may be included without the speaker holes 507 and 514.

The sensor modules 504, 516, and 519 may generate an electrical signal or a data value corresponding to an internal operating state of the electronic device 500 or an external environmental state. The sensor modules 504, 516, and 519 may include, for example, a first sensor module 504 (e.g., a proximity sensor) and/or a second sensor module (not shown) (e.g., a fingerprint sensor) disposed on the first surface 510A of the housing 510, and/or a third sensor module 519 (e.g., an HRM sensor) and/or a fourth sensor module 516 (e.g., a fingerprint sensor) disposed on the second surface 510B of the housing 510. The fingerprint sensor may be disposed not only in the first surface 510A (e.g., the display 501) but in the second surface 510B of the housing 510. The electronic device 500 may further include at least one of sensor modules (not shown), for example, a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 504.

The camera modules 505, 512, and 513 may include a first camera device 505 disposed on the first surface 510A of the electronic device 500, a second camera device 512 disposed on the second surface 510B, and/or a flash 513. The camera modules 505 and 512 may each include one or more lenses, an image sensor, and/or an ISP. The flash 513 may include, for example, an LED or a xenon lamp. In some embodiments, two or more lenses (IR cameras, wide angle and telephoto lenses) and image sensors may be disposed on one surface of the electronic device 500.

The key input device 517 may be disposed on the side surface 510C of the housing 510. In another embodiment, the electronic device 500 may not include some or all of the above-described key input device 517. The key input device 517 that is not included may be implemented in another form such as a soft key on the display 501. In some embodiments, the key input device may include the sensor module 516 disposed on the second surface 510B of the housing 510.

The light-emitting element 506 may be disposed on, for example, the first surface 510A of the housing 510. The light-emitting element 506 may provide, for example, state information of the electronic device 500 in the form of light. In another embodiment, the light emitting element 506 may provide, for example, a light source that is linked to the operation of the camera module 505. The light-emitting element 506 may include, for example, an LED, an IR LED, and a xenon lamp.

The connector holes 508 and 509 may include a first connector hole 508 for accommodating a connector (e.g., a USB connector) for transmitting and receiving power and/or data to and from an external electronic device, and/or a second connector hole 509 (e.g., an earphone jack) for accommodating a connector for transmitting and receiving an audio signal to and from an external electronic device.

Referring to FIG. 5C, the electronic device 500 may include a side bezel structure 540, a first support member 541 (e.g., a bracket), a front plate 520, a display 530, a PCB 550, a battery 560, a second support member 570 (e.g., a rear case), an antenna 580, and a rear plate 590. In some embodiments, the electronic device 500 may omit at least one (e.g., the first support member 541 or the second support member 570) of the components or may additionally include other components. At least one of the components of the electronic device 500 may be the same as or similar to at least one of the components of the electronic device 500 of FIG. 5A or 5B, and a repeated description thereof will be omitted hereinafter.

The first support member 541 may be disposed inside the electronic device 500 and connected to the side bezel structure 540 or may be formed integrally with the side bezel structure 540. The first support member 541 may be formed from, for example, a metal material and/or a non-metal material (e.g., polymer). The display 530 may be connected to one surface of the first support member 541, and the PCB 550 may be connected to the other surface of the first support member 541. The PCB 550 may be provided with a processor, a memory, and/or an interface mounted thereon. The processor may include, for example, one or more of a CPU, an AP, a GPU, an ISP, a sensor hub processor, and a CP.

The memory may include, for example, a volatile memory or a non-volatile memory.

The interface may include, for example, an HDMI, a USB interface, an SD card interface, and/or an audio interface. For example, the interface may electrically or physically connect the electronic device 500 to an external electronic device, and may include a USB connector, an SD card/multimedia card (MMC) connector, or an audio connector.

The battery 560, which is a device for supplying power to at least one component of the electronic device 500, may include, for example, a primary cell that is not rechargeable, a secondary cell that is rechargeable, or a fuel cell. For example, at least a portion of the battery 560 may be disposed on substantially the same plane as the PCB 550. The battery 560 may be disposed integrally inside the electronic device 500 or disposed detachably from the electronic device 500.

The antenna 580 may be disposed between the rear plate 590 and the battery 560. The antenna 580 may include, for example, an NFC antenna, a wireless charging antenna, and/or an MST antenna. The antenna 580 may, for example, perform short-range communication with an external device or wirelessly transmit and receive power required for charging to and from the external device. In another embodiment, an antenna structure may be formed by a portion of the side bezel structure 540 and/or the first support member 541 or a combination thereof.

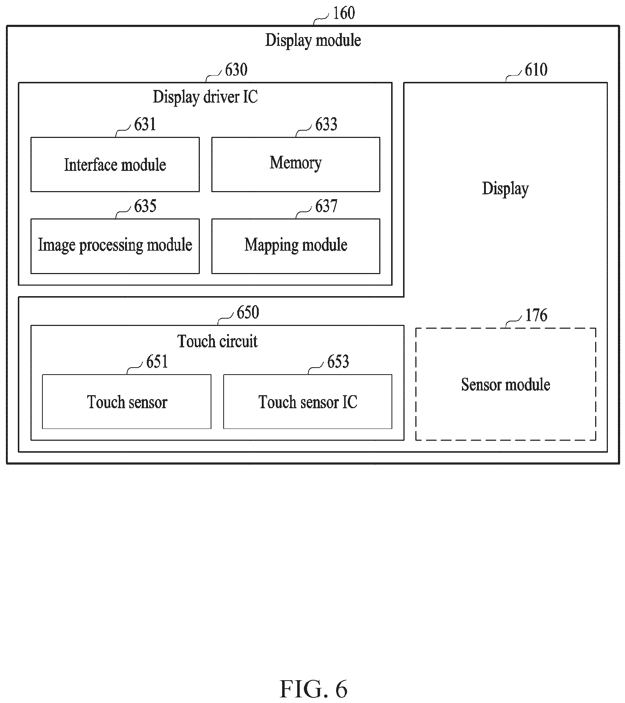

FIG. 6 is a block diagram of a display module according to an embodiment.

Referring to FIG. 6, the display module 160 may include a display 610 (e.g., the display 250 of FIGS. 2A to 2C, the display 330 of FIGS. 3A to 4B, or the display 501 of FIGS. 5A to 5C) and a display driver IC (DDI) 630 for controlling the display 610. The DDI 630 may include an interface module 631, a memory 633 (e.g., a buffer memory), an image processing module 635, or a mapping module 637. For example, the display 610 may include an expandable display (e.g., the display 250 of FIGS. 2A to 2C or the display 330 of FIGS. 3A to 4B). The DDI 630 may receive, for example, image information including image data or an image control signal corresponding to a command for controlling the image data from another component of the electronic device 101 (e.g., the electronic device 200 of FIGS. 2A to 2C, the electronic device 300 of FIGS. 3A to 4B, or the electronic device 500 of FIGS. 5A to 5C) through the interface module 631. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 630 may communicate with a touch circuit 650 or the sensor module 176 via the interface module 631. The DDI 630 may also store at least part of the received image information in the memory 633, for example, on a frame-by-frame basis. The image processing module 635 may perform pre-processing or post-processing (e.g., adjustment of resolution, brightness, or size) with respect to at least part of the image data, for example, based at least in part on characteristics of the image data or characteristics of the display 610. The mapping module 637 may generate a voltage value or a current value corresponding to the image data pre-processed or post-processed by the image processing module 135. According to an embodiment, the generating of the voltage value or current value may be performed, for example, based at least in part on attributes of the pixels (e.g., an array, such as a red, green, and blue (RGB) stripe or a pentile structure, of the pixels, or the size of each subpixel) of the display 610. At least some pixels of the display 610 may be driven, for example, based at least in part on the voltage value or the current value such that visual information (e.g., a text, an image, or an icon) corresponding to the image data may be displayed via the display 610.

According to an embodiment, the display module 160 may further include the touch circuit 650. The touch circuit 650 may include a touch sensor 651 and a touch sensor IC 653 to control the touch sensor 651. The touch sensor IC 653 may control the touch sensor 651, for example, to sense a touch input or a hovering input with respect to a predetermined position on the display 610. For example, the touch sensor IC 653 may sense the touch input or the hovering input by measuring a change in a signal (e.g., a voltage, a quantity of light, a resistance, or a quantity of electric charges) corresponding to the predetermined position on the display 610. The touch sensor IC 653 may provide information (e.g., the position, area, pressure, or time) about the sensed touch input or hovering input to the processor 120. According to an embodiment, at least part (e.g., the touch sensor IC 653) of the touch circuit 650 may be included as part of the display 610 or the DDI 630, or as part of another component (e.g., the auxiliary processor 123) disposed outside the display module 160.

According to an embodiment, the display module 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in a portion (e.g., the display 610 or the DDI 630) of the display module 160 or in a portion of the touch circuit 650. For example, when the sensor module 176 embedded in the display module 160 includes a biometric sensor (e.g., a fingerprint sensor), the biometric sensor may obtain biometric information (e.g., a fingerprint image) associated with a touch input through a partial area of the display 610. In another example, when the sensor module 176 embedded in the display module 160 includes a pressure sensor, the pressure sensor may obtain pressure information associated with a touch input through a partial or whole area of the display 610. According to an embodiment, the touch sensor 651 or the sensor module 176 may be disposed between pixels in a pixel layer of the display 610, or over or under the pixel layer.

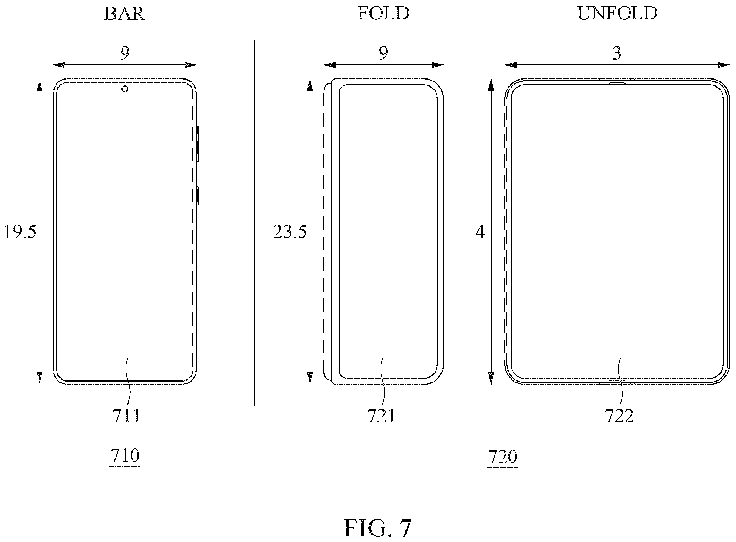

FIG. 7 is a diagram illustrating aspect ratios of electronic devices, according to an embodiment.

Referring to FIG. 7, an electronic device 710 (e.g., the electronic device 101 of FIG. 1 or the electronic device 500 of FIGS. 5A to 5C) according to an embodiment may include a bar-type display 711 (e.g., the display 501 of FIGS. 5A to 5C). A target electronic device 720 (e.g., the electronic device 104 of FIG. 1 or the electronic device 200 of FIGS. 2A to 2C) according to an embodiment may include a folded display 721 (e.g., a first rear area 216 of FIGS. 2A to 2C) and an unfolded display 722 (e.g., the first area 253, the second area 252, and the folding area 253 of FIGS. 2A to 2C).

The electronic device 710 according to an embodiment may be an electronic device including a bar-type display, an electronic device including a foldable display, or an electronic device including a rollable display or an electronic device (e.g., a device for extended reality (XR) such as augmented reality (AR) and virtual reality (VR)) (not shown) implementing VR. However, for ease of description, FIGS. 7 to 11B illustrate the electronic device 710 by assuming that the electronic device 710 is an electronic device including a bar-type display or an electronic device including a foldable display. However, the electronic device 710 is not limited to the embodiments described above. The target electronic device 720 according to an embodiment may be an electronic device including a bar-type display, an electronic device including a foldable display or an electronic device (e.g., a device for XR such as AR and VR) (not shown) implementing VR, or an electronic device including a rollable display. However, for ease of description, FIGS. 7 to 11B illustrate the target electronic device 720 by assuming that the target electronic device 720 is an electronic device including a foldable display or an electronic device including a rollable display. However, the target electronic device 720 is not limited to the embodiments described above.

An aspect ratio according to an embodiment may be expressed as the ratio of vertical length to horizontal length. For example, when the ratio of vertical length to horizontal length is 16:9, an aspect ratio may be expressed as 16:9 or 1.77:1.

The aspect ratio of a display 711 according to an embodiment may be expressed as 19.5:9 (or 2.2:1). The aspect ratio of the folded display 721 according to an embodiment may be expressed as 23.5:9 (or 2.6:1). The aspect ratio of the unfolded display 722 according to an embodiment may be expressed as 4:3 (or 1.33:1). However, embodiments of the present disclosure are not limited to the embodiments described above and may have various aspect ratios such as 1.37:1, 1.85:1, or 2.76:1.

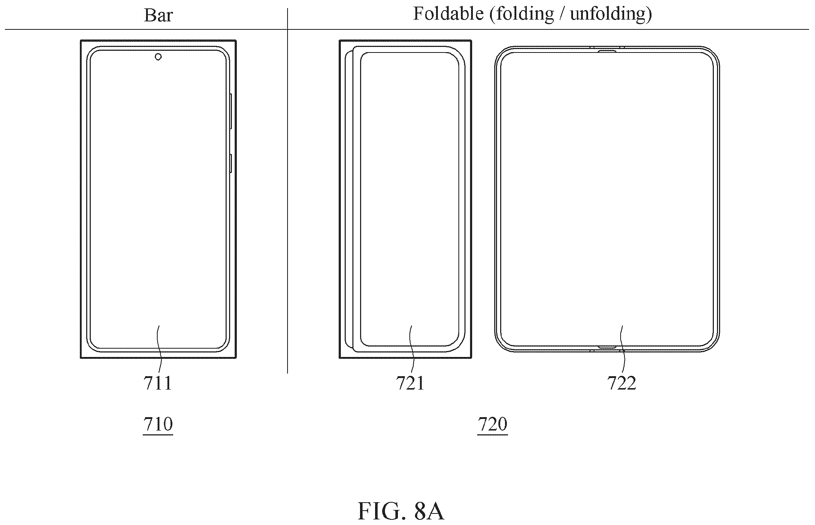

FIG. 8A schematically illustrates an electronic device and a target electronic device, according to an embodiment.

Referring to FIGS. 7 and 8A, the electronic device 710 according to an embodiment may compare the aspect ratio of the display 711 to the aspect ratios of the displays 721 and 722 of the target electronic device 720 and determine whether the aspect ratio of the display 711 is similar to the aspect ratios of the displays 721 and 722. For example, the processor 120 of the electronic device 710 may determine that the aspect ratio (e.g., 2.2:1) of the bar-type display 711 is similar to the aspect ratio (2.6:1) of the folded display 721. The electronic device 710 according to an embodiment may apply a screen setting to the folded display 721 of which the aspect ratio is determined to be similar to the aspect ratio of the display 711.

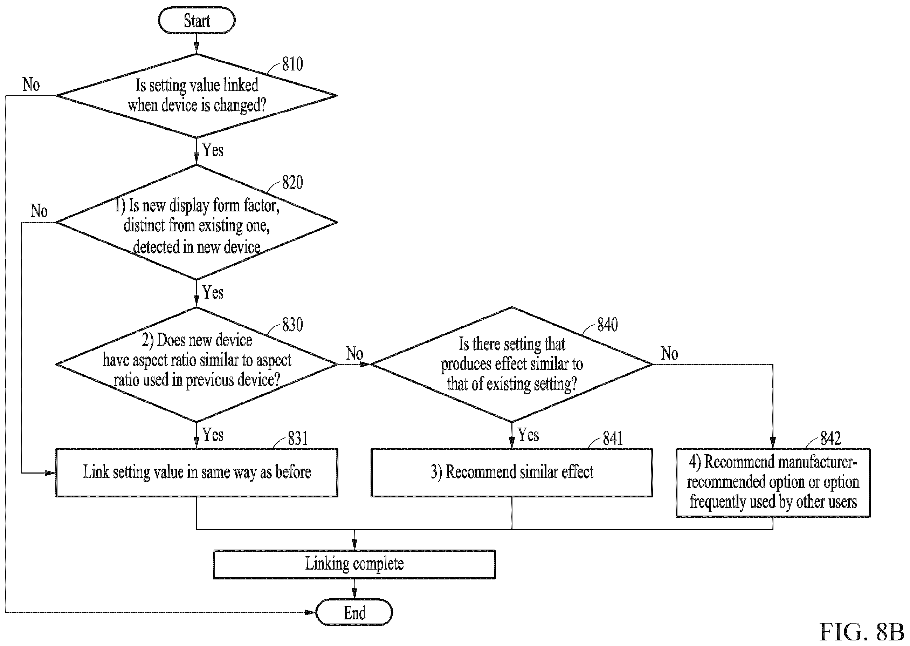

FIG. 8B is a flowchart illustrating the overall operation of a method of synchronizing data of an electronic device, according to an embodiment.

Referring to FIG. 8B, operations 810 to 842 may be performed by the processing device described with reference to FIGS. 1 to 8A, the descriptions provided with reference to FIGS. 1 to 8A may also apply to FIG. 8B, and a repeated description may be omitted.

Operations of FIG. 8B may be performed in the shown order and manner. However, the order of some operations may change, or some of the operations may be omitted, without departing from the spirit and scope of the shown example. The operations illustrated in FIG. 8B may be performed in parallel or simultaneously.

In operation 810, the electronic device 710 according to an embodiment may receive a request for changing a device to the target electronic device 720 and a request for linking data including a setting value.

In operation 820, when receiving the request for linking data, the electronic device 710 according to an embodiment may detect whether the target electronic device 720 (e.g., a new device) has a new display form factor.

In operation 830, the electronic device 710 (e.g., a previous device) according to an embodiment may determine whether any of the displays 721 and 722 of the target electronic device 720 has an aspect ratio similar to the aspect ratio (e.g., aspect ratio) of the display 711.

In operation 831, when the target electronic device 720 has a display having a similar aspect ratio thereto, the electronic device 710 according to an embodiment may link the screen setting value of the display 711 to the display of the target electronic device having a similar aspect ratio thereto.

In operation 840, the electronic device 710 according to an embodiment may determine whether a display of the target electronic device 720, which does not have a similar aspect ratio, may provide a similar effect as the display 711.

In operation 841, when the display of the target electronic device 720 that does not have a similar aspect ratio thereto has a setting that may provide a similar effect as the setting of the display 711, the electronic device 710 according to an embodiment may recommend the similar effect to the display of the target electronic device 720.

In operation 842, when the display of the target electronic device 720 that does not have a similar aspect ratio thereto has no setting that may provide a similar effect as the setting of the display 711, the electronic device 710 according to an embodiment may recommend a manufacturer-recommended option or an option used by multiple users to the display of the target electronic device 720.

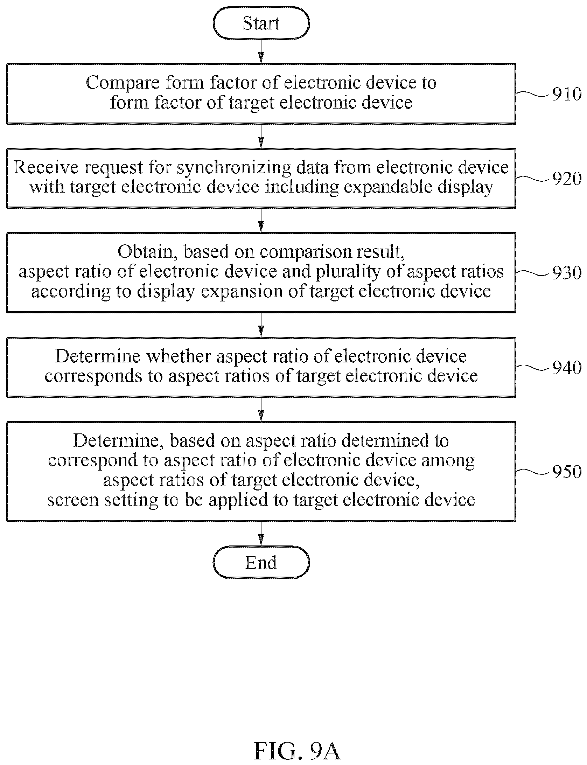

The operations described above may be described below with reference to FIGS. 9A to 11B.

FIG. 9A is a flowchart illustrating a method of synchronizing data between electronic devices, according to an embodiment.

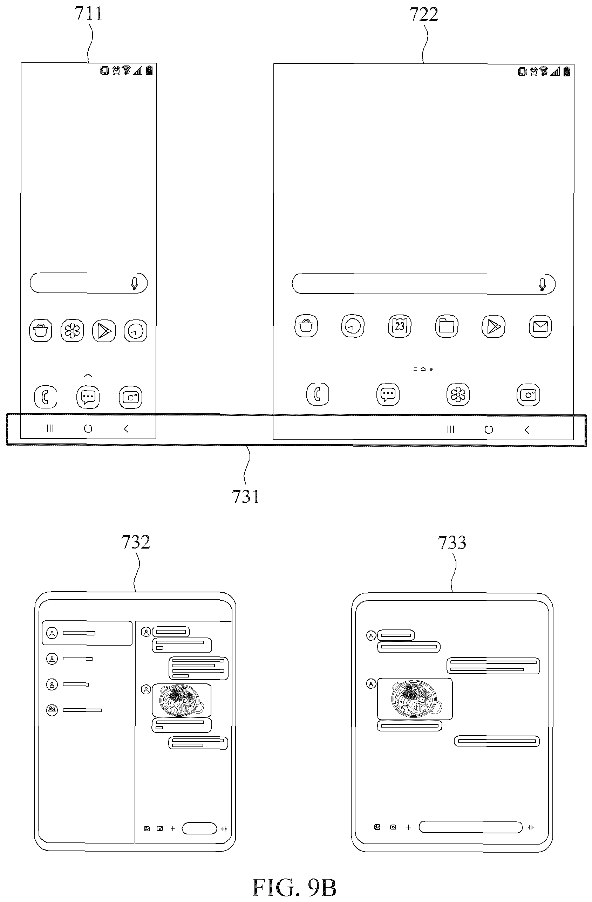

Referring to FIG. 9A, operations 910 to 950 may be performed by the processing device described with reference to FIGS. 1 to 8B, the descriptions provided with reference to FIGS. 1 to 8B may also apply to FIG. 9, and a repeated description may be omitted.

Operations of FIG. 9A may be performed in the shown order and manner. However, the order of some operations may change, or some of the operations may be omitted, without departing from the spirit and scope of the shown example. The operations illustrated in FIG. 9A may be performed in parallel or simultaneously.

Referring to FIG. 9A, the electronic device 710 (e.g., the electronic device 101 of FIG. 1 or the electronic device 500 of FIGS. 5A to 5C) according to an embodiment may synchronize data with the target electronic device 720 (e.g., the electronic device 104 of FIG. 1 or the electronic device 200 of FIGS. 2A to 2C).

Data according to an embodiment may include content data (e.g., media data such as photos, audio, video, etc.), application data, and screen setting data including screen resolution and/or arrangement of applications. However, the data of the embodiments of the present disclosure is not limited to the described embodiments.

In operation 910, the processor 120 of the electronic device 710 according to an embodiment may compare a form factor of the electronic device 710 to a form factor of the target electronic device 720. A form factor may refer to the appearance, size, and/or physical arrangement of an electronic device and may mainly refer to the hardware specifications of an electronic device.

By comparing the form factor of the electronic device 710 to the form factor of the target electronic device 720, data of the electronic device 710 may be synchronized with the target electronic device 720 when the form factor of the electronic device 710 matches the form factor of the target electronic device 720. In this case, a screen setting of the electronic device 710 according to an embodiment may correspond and apply to a screen setting of the target electronic device 720. For example, when both the form factor of the electronic device 710 and the form factor of the target electronic device 720 are bar-type displays, the screen setting of the electronic device 710 including the arrangement of applications and/or screen resolution may be synchronized with the target electronic device 720.

In operation 920, the electronic device 710 according to an embodiment may receive a request for data synchronization with the target electronic device 720 including an expandable display.

The communication module 190 included in the electronic device 710 according to an embodiment may transmit and receive the request for data synchronization to and from the target electronic device 720.

In operation 930, the electronic device 710 according to an embodiment may obtain, based on the comparison result, the aspect ratio of the electronic device 710 and a plurality of aspect ratios according to the display expansion of the target electronic device 720.

When determining that the form factor of the electronic device 710 differs from the form factor of the target electronic device 720, the processor 120 of the electronic device 710 according to an embodiment may obtain the aspect ratio of the display 711 of the electronic device 710 and the aspect ratios of the displays 721 and 722 of the target electronic device 720.

In operation 940, the electronic device 710 according to an embodiment may determine whether the aspect ratio of the electronic device 710 corresponds to the aspect ratios of the target electronic device 720.

The processor 120 of the electronic device 710 according to an embodiment may determine whether the aspect ratio of the display 711 corresponds to the aspect ratio of the folded display 721 of the target electronic device 720. The processor 120 of the electronic device 710 according to an embodiment may determine whether the aspect ratio of the display 711 corresponds to the aspect ratio of the unfolded display 722 of the target electronic device 720.

The electronic device 710 according to an embodiment may calculate a similarity between the aspect ratio of the electronic device 710 and each of the aspect ratios of the target electronic device 720.

The processor 120 according to an embodiment may calculate the similarity between the aspect ratio of the folded display 721 and the aspect ratio of the display 711. The processor 120 according to an embodiment may calculate the similarity between the aspect ratio of the unfolded display 722 and the aspect ratio of the display 711.

For example, a similarity may be the difference between 1 and a value obtained by dividing the aspect ratio of the display of the target electronic device 720 by the aspect ratio of the electronic device 710. For example, when the aspect ratio of the display 711 is 2.2:1, when the aspect ratio of the folded display 721 is 2.6:1, and when the aspect ratio of the unfolded display 722 is 1.2:1, the processor 120 may calculate a similarity. When the value obtained by dividing the aspect ratio of the folded display 721 by the aspect ratio of the display 711 is 2.6/2.2 (approximately 1.18), the similarity may be calculated as 0.18. When the value obtained by dividing the aspect ratio of the unfolded display 722 by the aspect ratio of the display 711 is 1.2/2.2 (approximately 0.54), the similarity may be calculated as 0.46.

The electronic device 710 according to an embodiment may determine, based on the calculation result, that an aspect ratio, of which the similarity is less than or equal to a predetermined threshold, corresponds to the aspect ratio of the electronic device 710 from among the aspect ratios of the target electronic device 720.

When the result of calculating the similarity between the aspect ratio of the folded display 721 and the aspect ratio of the display 711 is less than or equal to the predetermined threshold, the processor 120 according to an embodiment may determine that the aspect ratio of the folded display 721 corresponds to the aspect ratio of the display 711. When the result of calculating the similarity between the aspect ratio of the unfolded display 722 and the aspect ratio of the display 711 is less than or equal to the predetermined threshold, the processor 120 according to an embodiment may determine that the aspect ratio of the unfolded display 722 corresponds to the aspect ratio of the display 711.

When the similarity between each of the aspect ratios of the target electronic device 720 and the aspect ratio of the electronic device 710 is greater than the predetermined threshold, the electronic device 710 according to an embodiment may apply only a portion of the screen setting of the electronic device 710 to the target electronic device 720.

When the result of calculating the similarity between the aspect ratio of the folded display 721 and the aspect ratio of the display 711 is greater than the predetermined threshold, the processor 120 according to an embodiment may apply only a portion of the screen setting of the display 711 to the screen setting when the target electronic device 720 is in a folded state (e.g., when the folded display 721 is in operation). When the result of calculating the similarity between the aspect ratio of the unfolded display 722 and the aspect ratio of the display 711 is greater than the predetermined threshold, the processor 120 according to an embodiment may apply only a portion of the screen setting of the electronic device 710 to the screen setting when the target electronic device 720 is in an unfolded state (e.g., when the unfolded display 722 is in operation). After data is transmitted from the electronic device 710 to the target electronic device 720, only a portion of the screen setting may be applied to provide the user with a similar effect and experience in using the target electronic device 720. A similar effect may be to apply a screen setting by considering a display aspect ratio, density per inch (dpi), and/or resolution.

For example, under the assumption that the predetermined threshold is 0.2, the similarity between the folded display 721 and the display 711 is 0.18, so it may be determined that the aspect ratio of the folded display 721 corresponds to the aspect ratio of the display 711. The similarity between the unfolded display 722 and the display 711 is 0.46, so it may be determined that the aspect ratio of the unfolded display 722 does not correspond to the aspect ratio of the display 711.

For example, the processor 120 may directly link the screen setting of the electronic device 710 to the screen setting of the target electronic device 720 in which the folded display 721 determined to correspond is in operation. Alternatively, the processor 120 may select at least one of the wallpaper, lock screen, home setting, number of applications, and/or arrangement setting to provide a similar effect to the screen setting of the target electronic device 720 in which the folded display 721 determined to correspond is in operation and may apply the selection to the setting of the target electronic device 720 to be similar to the setting of the electronic device 710. On the other hand, the processor 120 may select at least one of the wallpaper, lock screen, home setting, number of applications, and/or arrangement setting to provide a similar effect to the screen setting of the target electronic device 720 in which the unfolded display 722 determined not to correspond is in operation and may apply the selection to the setting of the target electronic device 720 to be similar to the setting of the electronic device 710.

In operation 950, the electronic device 710 according to an embodiment may determine, based on an aspect ratio determined to correspond to the aspect ratio of the electronic device 710 among the aspect ratios of the target electronic device 720, a screen setting to be applied to the target electronic device 720.

The electronic device 710 according to an embodiment may transmit a request for screen setting data similar to the aspect ratio of the target electronic device 720 to a server connected to the electronic device 710 and receive pieces of similar screen setting data from the server.

The electronic device 710 according to an embodiment may recommend, based on the received pieces of data, pieces of screen setting data similar to the aspect ratio of the target electronic device 720 to the user. For example, when the form factor and display aspect ratio of the electronic device 710 is not similar to those of the target electronic device 720 and it is difficult to match settings that provide similar effects, a manufacturer-recommended option or an option frequently used by users of electronic devices with the same form factor may be recommended through the server such that these options are used for screen setting. For example, while similar aspect ratios are likely to exist for common terminal devices (e.g. smartphones), it may be difficult to achieve a similar effect when linking data to an electronic device implementing VR as display form factors are likely to be significantly different. When the display form factors are significantly different, it may be possible to recommend a manufacturer-recommended option that is useful for setting the target electronic device or an option that other users frequently use by communicating with the server.

The electronic device 710 according to an embodiment may further include an operation of modifying and applying, based on the determined screen setting of the electronic device 710, the aspect ratio of the target electronic device 720. When it is determined through the operations described above whether to directly link the screen setting of the electronic device 710, recommend a similar effect, or recommend a manufacturer-recommended option or an option frequently used by other users, the settings may be modified and linked to fit the form factor of the target electronic device 720.

FIG. 9B illustrates an example of a screen setting of a target electronic device, according to an embodiment.

Referring to FIG. 9B, when the aspect ratio of the display 711 of the electronic device 710 (e.g., the electronic device 101 of FIG. 1 or the electronic device 500 of FIGS. 5A to 5C) according to an embodiment does not match the aspect ratio of the unfolded display 722 of the target electronic device 720 (e.g., the electronic device 104 of FIG. 1 or the electronic device 200 of FIGS. 2A to 2C), a recommended option that matches the aspect ratio of the unfolded display 722 of the target electronic device 720 may be provided.

An option of positioning a Navi Bar button 731 on the left or right, unlike the screen setting of the display 711, may be recommended to the screen setting of the unfolded display 722 according to an embodiment.

The unfolded display 722 according to an embodiment has a larger screen size and higher resolution than the display 711, so it may be recommended to make the font size on the unfolded display 722 larger than that in the screen setting of the display 711 depending on the resolution and aspect ratio.

The unfolded display 722 of the target electronic device 720 according to an embodiment may support a tablet mode, so a standard mode 733 and a multi-view mode 732 may be recommended in a layout according to the aspect ratio. When the electronic device 710 according to an embodiment has only a bar-type display, the electronic device 710 may not have a setting value for the multi-view mode 732, and therefore, a setting value for the multi-view mode 732 may be newly recommended to the target electronic device 720.

In general, the display 711 of the electronic device 710 according to an embodiment may support a 4 × 5 or 5 × 6 home screen or app screen arrangement. The manufacturer may recommend using an arrangement such as 6 × 5 by considering the screen size of the unfolded display 722.

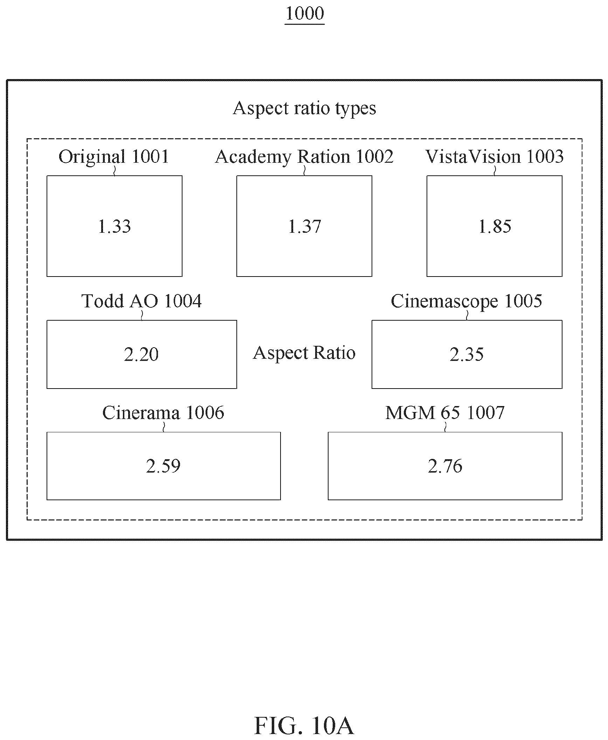

FIG. 10A is a flowchart of an example of aspect ratios according to an embodiment.

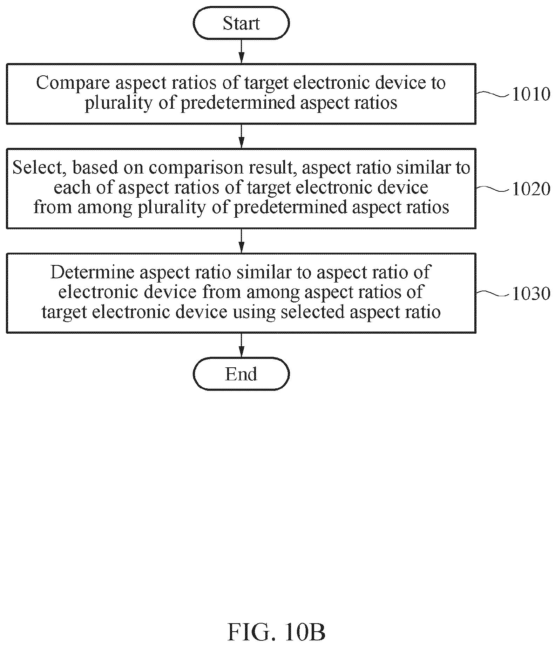

FIG. 10A illustrates an example of a plurality of predetermined aspect ratios 1000 according to an embodiment. The plurality of predetermined aspect ratios 1000 may include Original 1001 (aspect ratio: 1.33), Academy Ratio 1002 (aspect ratio: 1.37), VistaVision 1003 (aspect ratio: 1.85), Todd AO 1004 (aspect ratio: 2.20), Cinemascope 1005 (aspect ratio: 2.35), Cinerama 1006 (aspect ratio: 2.59), and MGM 65 1007 (aspect ratio: 2.76). However, the embodiments of the present disclosure are not limited to the aspect ratios described above and may further include popular aspect ratios. The operation of the electronic device 710 is described in detail below with reference to FIGS. 10A and 10B.

FIG. 10B is a flowchart illustrating an operation of finding a similar aspect ratio, according to an embodiment.

Referring to FIG. 10B, operations 1010 to 1030 may be performed by the processing device described with reference to FIGS. 1 to 9B, the descriptions provided with reference to FIGS. 1 to 9B may also apply to FIG. 10B, and a repeated description may be omitted.

Operations of FIG. 10B may be performed in the shown order and manner. However, the order of some operations may change, or some of the operations may be omitted, without departing from the spirit and scope of the shown example. The operations illustrated in FIG. 10B may be performed in parallel or simultaneously.

Referring to FIGS. 10A and 10B, the electronic device 710 according to an embodiment may perform operations 1010 to 1030 to perform operation 940 of determining whether the aspect ratio of the electronic device corresponds to the aspect ratios of the target electronic device.

In operation 1010, the electronic device 710 according to an embodiment may compare the aspect ratios of the target electronic device 720 to the plurality of predetermined aspect ratios 1000.

The processor 120 according to an embodiment may compare the aspect ratio of the folded display 721 of the target electronic device to the plurality of predetermined aspect ratios 1000. The processor 120 according to an embodiment may compare the aspect ratio of the unfolded display 722 to the plurality of predetermined aspect ratios 1000.

In operation 1020, the electronic device 710 according to an embodiment may select, based on the comparison result, an aspect ratio similar to each of the aspect ratios of the target electronic device 720 from among the plurality of predetermined aspect ratios 1000. The processor 120 according to an embodiment may select, from among the plurality of predetermined aspect ratios 1000, an aspect ratio similar to the aspect ratio of the folded display 721. The processor 120 according to an embodiment may select, from among the plurality of predetermined aspect ratios 1000, an aspect ratio similar to the aspect ratio of the unfolded display 722.

For example, when the aspect ratio of the folded display 721 is 2.6:1 (hereinafter, referred to as 2.6), the processor 120 may select Cinerama 1006 as a similar aspect ratio from among the plurality of aspect ratios 1000. When the aspect ratio of the unfolded display 722 is 1.33:1 (hereinafter, referred to as 1.33), the processor 120 may select Original 1001 as a similar aspect ratio from among the plurality of aspect ratios 1000.

In operation 1030, using the selected aspect ratio, the electronic device 710 according to an embodiment may determine an aspect ratio similar to the aspect ratio of the electronic device 710 from among the aspect ratios of the target electronic device 720. Using the selected aspect ratio, the processor 120 according to an embodiment may determine which of the folded display 721 and the unfolded display 722 is a display having an aspect ratio similar to that of the display 711.

For example, the aspect ratio of the display 711 has an aspect ratio similar to Todd AO 1004, the processor 120 may determine that the aspect ratio similar to Todd AO 1004 is Cinerama 1006 from among Original 1001 and Cinerama 1006. Cinerama 1006 has an aspect ratio similar to the folded display 721, so the processor 120 may determine that the display 711 and the folded display 721 have similar aspect ratios.

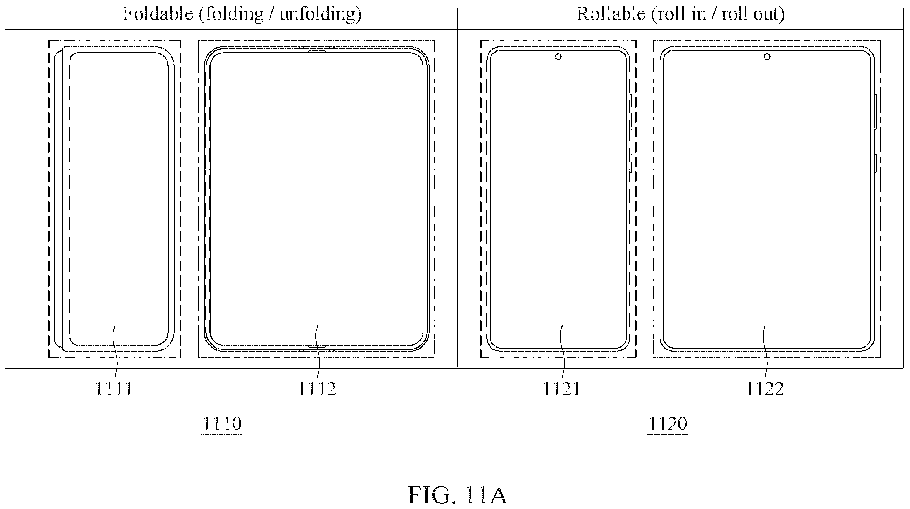

FIG. 11A schematically illustrates an electronic device and a target electronic device having a plurality of aspect ratios, according to an embodiment.

Referring to FIG. 11A, an electronic device 1110 (e.g., the electronic device 101 of FIG. 1 or the electronic device 200 of FIGS. 2A to 2C) according to an embodiment may include a folded display 1111 (e.g., the first rear area 216 of FIGS. 2A to 2C) and an unfolded display 1112 (e.g., the first area 251, the second area 252, and the folding area 253 of FIGS. 2A to 2C). A target electronic device 1120 (e.g., the electronic device 104 of FIG. 1) according to an embodiment may include a single expandable display (e.g., a rollable display, hereinafter, referred to as "rollable display"). A rollable display according to an embodiment may include a display in a rolled-in state 1121 and a display in a rolled-out state 1122.

The electronic device 1110 according to an embodiment may be an electronic device including a bar-type display, an electronic device including a foldable display, or an electronic device including a rollable display (not shown). However, for ease of description, FIGS. 7 to 11B illustrate the electronic device 1110 by assuming that the electronic device 1110 is an electronic device including a bar-type display or an electronic device including a foldable display. However, the electronic device 1110 is not limited to the embodiments described above.

The target electronic device 1120 according to an embodiment may be an electronic device (not shown) including a bar-type display, an electronic device including a foldable display, or an electronic device including a rollable display. However, for ease of description, FIGS. 7 to 11B illustrate the target electronic device 1120 by assuming that the target electronic device 1120 is an electronic device including a foldable display or an electronic device including a rollable display. However, the target electronic device 1120 is not limited to the embodiments described above.

The aspect ratio of the folded display 1111 according to an embodiment may be expressed as 23.5:9 (or 2.6:1). The aspect ratio of the unfolded display 1112 according to an embodiment may be expressed as 4:3 (or 1.33:1). The aspect ratio of the display in the rolled-in state 1121 (hereinafter, referred to as a "rolled-in display") according to an embodiment may be expressed as 23.5:9 (or 2.6:1). The aspect ratio of the display in the rolled-out state 1122 (hereinafter, referred to as a "rolled-out display") according to an embodiment may be expressed as 1.85:1. Embodiments of the present disclosure are not limited to the embodiments described above and may have various aspect ratios such as 1.37:1 or 2.76:1.

Referring to FIG. 11A, the electronic device 1110 according to an embodiment may compare aspect ratios of a plurality of displays 1111 and 1112 to aspect ratios of displays 1121 and 1122 of the target electronic device 1120 and determine whether they are similar. For example, the processor 120 of the electronic device 1110 may determine that the aspect ratio (e.g., 2.6:1) of the folded display 1111 is similar to the aspect ratio (2.6:1) of the rolled-in display 1121. The electronic device 1110 according to an embodiment may apply a screen setting of the folded display 1111 to the rolled-in display 1121 having an aspect ratio determined to be similar to that of the folded display 1111. The processor 120 may determine that the aspect ratio (e.g., 1.33:1) of the unfolded display 1112 is similar to the aspect ratio (1.85:1) of the rolled-out display 1122. The electronic device 1110 according to an embodiment may apply a screen setting of the unfolded display 1112 to the rolled-out display 1122 having an aspect ratio determined to be similar to that of the unfolded display 1112.

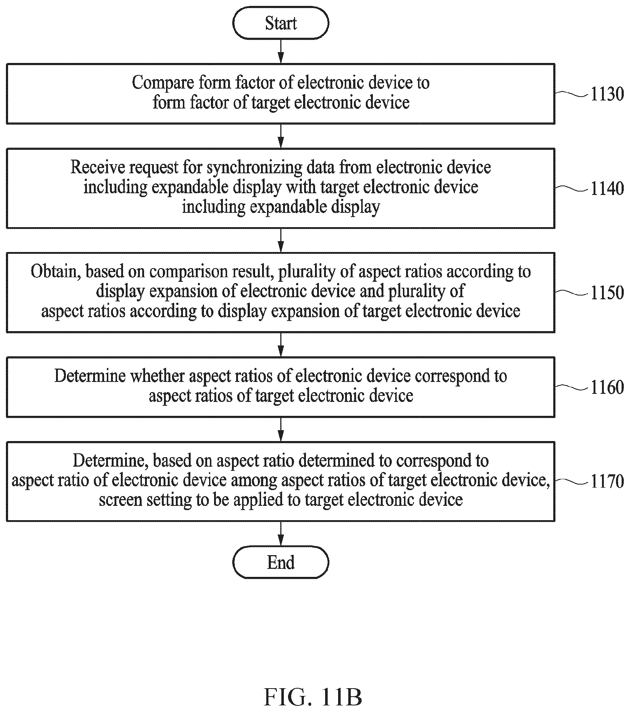

FIG. 11B is a flowchart illustrating a method of synchronizing data between electronic devices having a plurality of display aspect ratios, according to an embodiment.

Referring to FIG. 11B, operations 1130 to 1170 may be performed by the processing device described with reference to FIGS. 6 and 11A, the descriptions provided with reference to FIGS. 1 and 11A may also apply to FIG. 11B, and a repeated description may be omitted.

Operations of FIG. 11B may be performed in the shown order and manner. However, the order of some operations may change, or some of the operations may be omitted, without departing from the spirit and scope of the shown example. The operations illustrated in FIG. 11B may be performed in parallel or simultaneously.

Referring to FIG. 11B, the electronic device 1110 according to an embodiment may synchronize data with the target electronic device 1120.

In operation 1130, the processor 120 of the electronic device 1110 according to an embodiment may compare a form factor of the electronic device 1110 to a form factor of the target electronic device 1120.

By comparing the form factor of the electronic device 1110 to the form factor of the target electronic device 1120, data from the electronic device 1110 may be synchronized with the target electronic device 1120 when the form factor of the electronic device 1110 matches the form factor of the target electronic device 1120. In this case, a screen setting of the electronic device 1110 may correspond and apply to a screen setting of the target electronic device 1120. For example, when the aspect ratios of the folded display 1111 and the rolled-in display 1121 among the form factor of the electronic device 1110 and the form factor of the target electronic device 1120 match each other and the aspect ratios of the unfolded display 1112 and the rolled-out display 1122 match each other, the screen settings including the arrangement of applications and/or the screen resolution of the electronic device 1110 may be synchronized with the target electronic device 1120 corresponding to each of the aspect ratios.

In operation 1140, the electronic device 1110 having an expandable display (e.g., a plurality of displays or a single expandable display) according to an embodiment may receive a request for synchronizing data with the target electronic device 1120 including the expandable display.

The communication module 190 included in the electronic device 1110 according to an embodiment may transmit and receive a request for synchronizing data to and from the target electronic device 1120.

In operation 1150, the electronic device 1110 according to an embodiment may obtain, based on the comparison result, aspect ratios of the electronic device 1110 and a plurality of aspect ratios according to the display expansion of the target electronic device 720.

When determining that the form factor of the electronic device 1110 differs from the form factor of the target electronic device 1120, the processor 120 of the electronic device 1110 according to an embodiment may obtain aspect ratios of the folded display 1111 and the unfolded display 1112 of the electronic device 1110 and aspect ratios of the displays 1121 and 1122 of the target electronic device 1120.

In operation 1160, the electronic device 1110 according to an embodiment may determine whether the aspect ratios of the electronic device 1110 correspond to the aspect ratios of the target electronic device 1120.

The processor 120 according to an embodiment may determine whether the aspect ratio of the folded display 1111 corresponds to the aspect ratio of the rolled-in display 1121. The processor 120 according to an embodiment may determine whether the aspect ratio of the folded display 1111 corresponds to the aspect ratio of the rolled-out display 1122. The processor 120 according to an embodiment may determine whether the aspect ratio of the unfolded display 1112 corresponds to the aspect ratio of the rolled-in display 1121. The processor 120 according to an embodiment may determine whether the aspect ratio of the unfolded display 1112 corresponds to the aspect ratio of the rolled-out display 1122.

The electronic device 1110 according to an embodiment may calculate a similarity between each of the aspect ratios of the electronic device 1110 and each of the aspect ratios of the target electronic device 1120.

The processor 120 according to an embodiment may calculate the similarity between the aspect ratio of the folded display 1111 and the aspect ratio of the rolled-in display 1121. The processor 120 according to an embodiment may calculate the similarity between the aspect ratio of the folded display 1111 and the aspect ratio of the rolled-out display 1122. The processor 120 according to an embodiment may calculate the similarity between the aspect ratio of the unfolded display 1112 and the aspect ratio of the rolled-in display 1121. The processor 120 according to an embodiment may calculate the similarity between the aspect ratio of the unfolded display 1112 and the aspect ratio of the rolled-out display 1122.

The electronic device 1110 according to an embodiment may determine, based on the calculation result, that an aspect ratio, of which the similarity is less than or equal to a predetermined threshold, corresponds to the aspect ratio of the electronic device 1120 from among the aspect ratios of the electronic device 1110.

When the result of calculating the similarity between the aspect ratio of the folded display 1111 and the aspect ratio of the rolled-in display 1121 is less than or equal to the predetermined threshold, the processor 120 according to an embodiment may determine that the aspect ratio of the folded display 1111 corresponds to the aspect ratio of the rolled-in display 1121. When the result of calculating the similarity between the aspect ratio of the unfolded display 1112 and the aspect ratio of the rolled-out display 1122 is less than or equal to the predetermined threshold, the processor 120 according to an embodiment may determine that the aspect ratio of the unfolded display 1112 corresponds to the aspect ratio of the rolled-out display 1122.

When the similarity between each of the aspect ratios of the target electronic device 1120 and the aspect ratio of the electronic device 1110 is greater than the predetermined threshold, the electronic device 1110 according to an embodiment may apply only a portion of the screen setting of the electronic device 1110 to the target electronic device.

When the result of calculating the similarity between the aspect ratio of the folded display 1111 and the aspect ratio of the rolled-in display 1121 is greater than the predetermined threshold, the processor 120 according to an embodiment may apply only a portion of the screen setting of the folded display 1111 to the screen setting when the target electronic device 1120 is in a rolled-in state (e.g., when the rolled-in display 1121 is in operation). When the result of calculating the similarity between the aspect ratio of the unfolded display 1112 and the aspect ratio of the rolled-out display 1122 is greater than the predetermined threshold, the processor 120 according to an embodiment may apply only a portion of the screen setting of the electronic device 1110 to the screen setting when the target electronic device 1120 is in an rolled-out state (e.g., when the rolled-out display 1122 is in operation). After data is transmitted from the electronic device 1110 to the target electronic device 1120, only a portion of the screen setting may be applied to provide the user with a similar effect and experience in using the target electronic device 1120.

For example, the processor 120 may directly link the screen setting of the folded display 1111 of the electronic device 1110 to the screen setting of the target electronic device 1120 in which the rolled-in display 1121 determined to correspond is in operation. Alternatively, the processor 120 may select at least one of the wallpaper, lock screen, home setting, number of applications, and/or arrangement setting to provide a similar effect to the screen setting of the target electronic device 1120 in which the rolled-in display 1121 determined to correspond is in operation and may apply the selection to the screen setting of the rolled-in display 1121 of the target electronic device 1120 to be similar to the screen setting of the folded display 1111 of the electronic device 1110. As in the example described above, the processor 120 may directly apply the screen setting of the unfolded display 1112 of the electronic device 1110 to the screen setting of the rolled-out display 1122 of the target electronic device 1120 or provide a similar effect.

In operation 1170, the electronic device 1110 according to an embodiment may determine, based on an aspect ratio determined to correspond to the aspect ratio of the electronic device 1110 among the aspect ratios of the target electronic device 1120, a screen setting to be applied to the target electronic device 1120

The electronic device 1110 according to an embodiment may transmit a request for screen setting data similar to the aspect ratio of the target electronic device 1120 to a server connected to the electronic device 1110 and receive pieces of similar screen setting data from the server.

The electronic device 1110 according to an embodiment may recommend, based on the received pieces of data, pieces of screen setting data similar to the aspect ratio of the target electronic device 1120 to the user.

An operation of finding a similar aspect ratio using the plurality of predetermined aspect ratios described with reference to FIGS. 10A and 10B may also be applied to the electronic device 1110 and the target electronic device 1120 described with reference to FIGS. 11A and 11B. The operation may be applied to compare each of the aspect ratios of the plurality of displays 1111 and 1112 of the electronic device 1110 to each of the aspect ratios of the display states 1121 and 1122 of the target electronic device 1120.

The descriptions provided with reference to FIGS. 7 to 11B may also apply to the case in which the target electronic device 104 is an electronic device (e.g., a device for XR such as AR and VR) (not shown) that implements VR.

When the target electronic device 104 according to an embodiment is an electronic device (hereinafter, referred to as a "VR device") that implements VR, it may be assumed that the aspect ratio of the VR device is unlimited. Even when the aspect ratio is unlimited, the range in which a user of the VR device uses and recognizes apps within VR may be set in the same way as when an existing electronic device (e.g., the electronic device 101 of FIG. 1, the electronic device 500 of FIGS. 5A to 5C, the electronic device 710 of FIG. 7, or the electronic device 1110 of FIG. 11) is used. That is, considering the convenience of a user using a VR device, a method of applying the setting of the existing electronic device of the user identically or similarly to the target electronic device 104 may be considered.

The electronic device according to the embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic device is not limited to those described above.

It should be appreciated that various embodiments of the disclosure and the terms used therein are not intended to limit the technological features set forth herein to particular embodiments and include various changes, equivalents, or replacements for a corresponding embodiment. In connection with the description of the drawings, like reference numerals may be used for similar or related components. It is to be understood that a singular form of a noun corresponding to an item may include one or more of the things, unless the relevant context clearly indicates otherwise. As used herein, "A or B," "at least one of A and B," "at least one of A or B," "A, B or C," "at least one of A, B and C," and "at least one of A, B, or C," may include any one of the items listed together in the corresponding one of the phrases, or all possible combinations thereof. Terms such as "1st" and "2nd," or "first" and "second" may be used to simply distinguish a corresponding component from other components, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as a memory of the manufacturer's server, a server of the application store, or a relay server.

According to an embodiment, each component (e.g., a module or a program) of the above-described components may include a single entity or multiple entities, and some of the multiple entities may be separately disposed in different components. According to an embodiment, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101; 710) comprising:
a communication module (190) configured to receive a request for synchronizing data with a target electronic device (104; 720) comprising an expandable display, wherein the expandable display comprises a plurality of displays or a single expandable display;
a display module (160);
a memory configured to store instructions; and
a processor (120),
wherein the instructions, when executed by the processor, cause the electronic device to:
compare, according to the request for synchronizing data, a form factor of the electronic device (101; 710) to a form factor of the target electronic device (104; 720), obtain, based on the comparison result, an aspect ratio of the electronic device (101; 710) and a plurality of aspect ratios according to display expansion of the target electronic device (104; 720); determine whether the aspect ratio of the electronic device (101; 710) corresponds to the aspect ratios of the target electronic device (104; 720); and
determine, based on an aspect ratio determined to correspond to the aspect ratio of the electronic device (101; 710) among the aspect ratios of the target electronic device (104; 720), a screen setting to be applied to the target electronic device (104; 720).

2. The electronic device (101; 710) of claim 1, wherein the electronic device (101; 710) is configured to:
calculate a similarity between the aspect ratio of the electronic device (101; 710) and each of the aspect ratios of the target electronic device (104; 720); and
determine, based on the calculation result, that an aspect ratio of which the similarity is less than or equal to a predetermined threshold among the aspect ratios of the target electronic device (104; 720) corresponds to the aspect ratio of the electronic device (101; 710).

3. The electronic device (101; 710) of claim 2, wherein the electronic device (101; 710) is configured to, when the similarity between the aspect ratio of the electronic device (101; 710) between each of the aspect ratios of the target electronic device (104; 720) is greater than the predetermined threshold, apply only a portion of the screen setting of the electronic device (101; 710) to the target electronic device (104; 720).

4. The electronic device (101; 710) of claim 1, wherein the electronic device (101; 710) is configured to:
compare the aspect ratios of the target electronic device (104; 720) to a plurality of predetermined aspect ratios (1000);
select, based on the comparison result, an aspect ratio similar to each of the aspect ratios of the target electronic device (104; 720) from among the plurality of predetermined aspect ratios (1000); and
using the selected aspect ratio, determine an aspect ratio similar to the aspect ratio of the electronic device (101; 710) from among the aspect ratios of the target electronic device (104; 720).

5. The electronic device of claim 1, wherein the electronic device (101; 710) is configured to, when the electronic device (101; 1110) comprises a plurality of displays or a single expandable display:
obtain a plurality of aspect ratios according to display expansion of the electronic device (101; 1110) and a plurality of aspect ratios according to display expansion of the target electronic device (104; 1120);
determine whether aspect ratios of the electronic device (101; 1110) respectively correspond to the aspect ratios of the target electronic device (104; 1120); and
determine, based on an aspect ratio determined to correspond to the aspect ratios of the electronic device (101; 1110) among the aspect ratios of the target electronic device (104; 1120), screen settings to be applied to the target electronic device (104; 1120).

6. The electronic device of claim 5, wherein the electronic device (101; 710) is configured to:
calculate a similarity between each of the aspect ratios of the electronic device (101; 1110) and each of the aspect ratios of the target electronic device (104; 1120); and
determine, based on the calculation result, that an aspect ratio of which the similarity is less than or equal to a predetermined threshold among the aspect ratios of the target electronic device (104; 1120) corresponds to an aspect ratio of the electronic device (101; 1110).

7. The electronic device of claim 5, wherein, when the similarity between each of the aspect ratios of the electronic device (101; 1110) and each of the aspect ratios of the target electronic device (104;1120) is greater than the predetermined threshold, the electronic device (101; 710) is configured to apply only a portion of the screen setting of the electronic device (110; 1110) to the target electronic device (104; 1120).

8. The electronic device of claim 1, wherein, when the form factor of the electronic device (101) matches the form factor of the target electronic device (104), the electronic device (101; 710) is configured to synchronize data of the electronic device (101) with the target electronic device (104).

9. The electronic device of claim 1, wherein the electronic device (101; 710) is configured to:
receive, from a server, pieces of screen setting data similar to an aspect ratio of the target electronic device (104; 720) by transmitting a request for the pieces of screen setting data to the server connected to the electronic device (101; 710);
recommend, based on the received pieces of screen setting data, the pieces of screen setting data similar to the aspect ratio of the target electronic device (104; 720) to a user; and
modify and apply, based on the determined screen setting of the electronic device (101; 710), the aspect ratio of the target electronic device (104; 720).

10. An electronic device (101) comprising:
a communication module (190) configured to receive a request for synchronizing data with a target electronic device (104);
a display module (160) comprising an expandable display, wherein the expandable display comprises a plurality of displays or a single expandable display;
a memory configured to store instructions; and
a processor (120),
wherein the instructions, when executed by the processor, cause the electronic device to:
compare, according to the request for synchronizing data, a form factor of the electronic device (101) to a form factor of the target electronic device (104) and obtain, based on the comparison result, a plurality of aspect ratios according to display expansion of the electronic device (101) and an aspect ratio of the target electronic device (104);
determine whether the aspect ratios of the electronic device (101) correspond to the aspect ratio of the target electronic device (104); and
determine, based on an aspect ratio determined to correspond to the aspect ratio of the target electronic device (104) among the aspect ratios of the electronic device (101), a screen setting to be applied to the target electronic device (104).

11. A method of synchronizing data between devices, the method comprising:
comparing a form factor of an electronic device (101; 710) to a form factor of a target electronic device (104; 720);
receiving a request for synchronizing data from the electronic device (101; 710) with the target electronic device (104; 720) comprising an expandable display, wherein the expandable display comprises a plurality of displays or a single expandable display;
obtaining, based on the comparison result, an aspect ratio of the electronic device (101; 710) and a plurality of aspect ratios according to display expansion of the target electronic device (104; 720);
determining whether the aspect ratio of the electronic device (101; 710) corresponds to the aspect ratios of the target electronic device (104; 720); and
determining, based on an aspect ratio determined to correspond to the aspect ratio of the electronic device (101; 710) among the aspect ratios of the target electronic device (104; 720), a screen setting to be applied to the target electronic device (104; 720).

12. The method of claim 11, wherein the determining of whether the aspect ratio of the electronic device (101; 710) corresponds to the aspect ratios of the target electronic device (104; 720) comprises:
calculating a similarity between each of the aspect ratios of the target electronic device (104; 720) and the aspect ratio of the electronic device (101; 710);
determining, based on the calculation result, that an aspect ratio of which the similarity is less than or equal to a predetermined threshold among the aspect ratios of the target electronic device (104; 720) corresponds to the aspect ratio of the electronic device (101; 710); and
when the similarity between each of the aspect ratios of the target electronic device (104; 720) and the aspect ratio of the electronic device (101; 710) is greater than the predetermined threshold, applying only a portion of the screen setting of the electronic device (101; 710) to the target electronic device (104; 720).

13. The method of claim 11, wherein the determining of whether the aspect ratio of the electronic device (101; 710) corresponds to the aspect ratios of the target electronic device (104; 720) comprises:
comparing the aspect ratios of the target electronic device (104; 720) to a plurality of predetermined aspect ratios (1000);
selecting, based on the comparison result, an aspect ratio similar to each of the aspect ratios of the target electronic device (104; 720) from among the plurality of predetermined aspect ratios (1000); and
using the selected aspect ratio, determining an aspect ratio similar to the aspect ratio of the electronic device (101; 710) from among the aspect ratios of the target electronic device (104; 720).

14. The method of claim 11, wherein the obtaining of the aspect ratio of the electronic device (101; 1110) further comprises obtaining, when the electronic device (101; 1110) comprises a plurality of displays or a single expandable display, a plurality of aspect ratios according to display expansion of the electronic device (101; 1110).

15. The method of claim 14, wherein the determining of whether the aspect ratio of the electronic device (101; 710) corresponds to the aspect ratios of the target electronic device (104; 720) comprises:
calculating a similarity between each of the aspect ratios of the electronic device (101; 1110) and the aspect ratios of the target electronic device (104; 1120);
determining, based on the calculation result, that an aspect ratio of which the similarity is less than or equal to a predetermined threshold corresponds to the aspect ratio of the target electronic device (104: 1120) among the aspect ratios of the electronic device (101; 1110); and
applying, when the similarity between each of the aspect ratios of the electronic device (101; 1110) and each of the aspect ratios of the target electronic device (104; 1120) is greater than the predetermined threshold, only a portion of a screen setting of the electronic device (101; 1110) to the target electronic device (104; 1120).
